# EUROPEAN PATENT APPLICATION

(11) **EP 4 579 338 A1**
(43) Date of publication of application: **02.07.2025**
(21) Application number: 23872668.1
(22) Date of filing: 08.03.2023
(51) Int. Cl.: G03B 21/625, G03B 21/00, G02B 3/08, G02B 3/00, G02B 27/01, B60K 35/00

(54) **VEHICLE IMAGING DEVICE WITH LARGE ASPECT RATIO USING PROJECTION OPTICAL SYSTEM**

(30) Priority: 26.09.2022 KR 20220121820
(71) Applicant: LG Electronics Inc., Yeongdeungpo-gu Seoul 07336 (KR)
(72) Inventor: KWEON, Ohjin, Seoul 06772 (KR)
(74) Representative: Vossius & Partner Patentanwälte Rechtsanwälte mbB
(86) International application number: PCT/KR2023/003190
(87) International publication number: WO 2024/071537

(57) **Abstract**

A vehicle imaging device comprises: a cover that forms the exterior of a dashboard of a vehicle; a picture generation unit (PGU) disposed within the dashboard and forming light on one side; a screen panel disposed between the PGU and the cover and configured to reflect light formed by the PGU so as to allow an image to pass through the cover via the reflected light; and a mirror disposed on one side of the PGU and reflecting the light formed on the one side and transmitting same to the screen panel, wherein the image formed by light reflected from the screen panel may be displayed in a specific area of a windshield of a driver's seat of the vehicle with a width in one axial direction greater than a length in the other axial direction.

## Description

### Technical Field

This specification relates to a vehicle imaging device. One particular implementation relates to a vehicle imaging device having a large aspect ratio using a projection optical system.

### Background Art

A vehicle is an apparatus capable of being moved in a desired direction by a user who is on board. A representative example of a vehicle may be an automobile.

For convenience of a user using a vehicle, various types of sensors and electronic devices are arranged in the vehicle. In particular, for the convenience of the user's driving, research on an advanced driver assistance system (ADAS) is being actively carried out. In addition, an autonomous vehicle is actively under development.

In some embodiments, a vehicle display that shows various driving information of the vehicle is located below a driver's forward visual field for driving, which affects driving safety, a phenomenon known as rubbernecking. Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or provide personal entertainment content in a front region of a passenger or rear seat of the vehicle.

To display such driving-related information or entertainment content in a specific region of the windshield at the front of the vehicle, the vehicle imaging device may need to have a large aspect ratio in which a width in one direction is a certain percentage greater than a length in another direction. However, there is a problem in that any position and any structure to provide the vehicle imaging device for constituting a screen with a large aspect ratio in the vehicle are not mentioned.

### Disclosure of Invention

### Technical Problem

An aspect of this specification is to provide a vehicle imaging device having a large aspect ratio using a projection optical system related to the vehicle.

Another aspect of this specification is to display driving-related information on a screen having a large aspect ratio in a specific region of the windshield at the front of the vehicle.

Still another aspect of this specification is to provide a vehicle imaging device having an optical structure and a special screen for allowing an image to have a large aspect ratio by using a single image module.

Still another aspect of this specification is to implement continuous images related to driving-related information to have a large aspect ratio by using a single image module.

Still another aspect of this specification is to provide a small and thin vehicle imaging device.

The tasks to be solved in the disclosure may not be limited to the aforementioned, and other problems to be solved by the disclosure will be obviously understood by a person skilled in the art based on the following description.

### Solution to Problem

In order to achieve those aspects and other advantages according to one or more embodiments, there is a vehicle imaging device including: a cover forming appearance of a dashboard of a vehicle; a picture generation unit (PGU) arranged inside the dashboard and configured to generate light to one side; a screen panel arranged between the PGU and the cover, and configured to reflect light generated by the PGU so that an image by the reflected light passes through the cover; and a mirror arranged on one side of the PGU, and configured to reflect the light generated to the one side so that the reflected light is transmitted to the screen panel, wherein the image by the light reflected from the screen panel may be displayed in a specific region of a windshield of a driver's seat of the vehicle, so that a width of the image in one axial direction is greater than a length in another axial direction.

In an embodiment, the PGU and the mirror may be arranged on a left side of the screen panel. The screen panel may have an inclined structure in which a vertical distance to the cover decreases from left to right. The light generated by the PGU may be reflected from the first mirror, the second mirror, and the screen panel, and diffuse in a certain angular range based on a direction perpendicular to the cover.

In an embodiment, the PGU and the mirror may be arranged on a right side of the screen panel. The screen panel may have an inclined structure in which a vertical distance to the cover increases from left to right. The light generated by the PGU may be reflected from the first mirror, the second mirror, and the screen panel, and diffuse in a certain angular range based on a direction perpendicular to the cover.

In an embodiment, the mirror may include: a first mirror arranged on one side of the PGU and configured to change an optical path by reflecting the light generated to the one side; and a second mirror configured to reflect the light reflected from the first mirror to be transmitted to the screen panel. One surface of the first mirror, onto which the light generated by the PGU is incident, may be formed in a plane shape by being tilted to one side by a first angle relative to the incident light. One surface of the second mirror, onto which the light reflected from the first mirror is incident, may be formed in a curved shape by being tilted to another side by a second angle. The second angle may be set to be smaller than the first angle.

In an embodiment, the screen panel may be formed inside the dashboard to have a first width in one axial direction and a first length in another axial direction. A ratio of the first width and the first length may be set to a first ratio. A ratio of the width and the length of the image displayed on the windshield may be set to a second ratio. A top of the image displayed on the windshield may be positioned lower than a center line of the windshield. The first and second ratios may be set to be at least 5:1.

In an embodiment, the screen panel may include: a reflective layer including patterns formed in the another axial direction and arranged spaced apart in the one axial direction and configured to reflect the light generated by the PGU; and a diffusion layer arranged on one surface of the reflective layer and configured to diffuse the light reflected from the reflective layer in a certain angular range based on the direction perpendicular to the cover. The patterns may be arranged such that a spaced distance between the patterns of the reflective layer decreases as a vertical distance from the screen panel to the cover decreases.

In an embodiment, the PGU may include: a display panel; a prism arranged spaced apart from the display panel and including a mirror and a polarization beam splitter (PBS) formed therein; a polarization conversion plate arranged parallel to the display panel between the display panel and the prism; and a projection lens including a plurality of lenses arranged spaced apart from the prism.

In an embodiment, the display panel may include a first region corresponding to a region where the polarization conversion plate and the mirror are arranged, and a second region corresponding to a region where the PBS is arranged. One end of the polarization conversion plate may correspond to one end of the display panel. Another end of the polarization conversion plate may correspond to a center of the display panel.

In an embodiment, an S-wave passing through the polarization conversion plate in the first region may be reflected from the mirror and the PBS to be incident onto the projection lens. A P-wave output in the second region may pass through the PBS to be incident onto the projection lens. The prism may include a first absorbing layer attached to upper and side surfaces of the prism corresponding to the first region or a second absorbing layer attached to upper and side surfaces of the prism corresponding to the second region.

In an embodiment, the PGU may include: a display panel configured to radiate a P-polarized signal; a prism arranged spaced apart from the display panel and including a mirror and a half mirror arranged therein; and a projection lens including a plurality of lenses arranged spaced apart from the prism. P-polarized signals radiated from a first region, which is one side of the display panel, may be all reflected from the mirror and reflected by a certain percentage from the half mirror to be incident onto the projection lens. A remaining percentage of the P-polarized signal passed through the half mirror, of P-polarized signals radiated from the second region, which is another side of the display panel, may be incident onto the projection lens.

In an embodiment, the PGU may include: a display panel; a lower prism arranged spaced apart from the display panel and having a certain height; a prism arranged above the lower prism, and including therein a first PBS and a second PBS; and a projection lens including a plurality of lenses arranged spaced apart from the prism.

In an embodiment, the display panel may include a first region corresponding to a region where the first PBS is arranged, and a second region corresponding to a region where the second PBS is arranged. An upper end of the first PBS may correspond to a center of the display panel. A lower end of the second PBS may correspond to the center of the display panel.

In an embodiment, the first PBS may be implemented as a mirror. The prism may include an absorbing layer attached to upper and side surfaces of the prism corresponding to the second region. A P-wave of an optical signal output to the first region may be reflected from the mirror arranged in the first region of the prism and may pass through the second PBS to be absorbed by the absorbing layer. An S-wave of the optical signal output to the first region may be reflected from the mirror and reflected from the second PBS to be incident onto the projection lens.

In an embodiment, an S-wave reflected from the second PBS, of an optical signal output to the second region, may be absorbed by the absorbing layer. A P-wave passing through the second PBS, of the optical signal output to the second region, may be incident onto the projection lens.

In an embodiment, the prism may include a first absorbing layer attached to upper and side surfaces of the prism corresponding to the first region, and a second absorbing layer attached to upper and side surfaces of the prism corresponding to the second region. A P-wave of an optical signal output to the first region may pass through the first PBS arranged in the first region to be absorbed by the first absorbing layer. An S-wave of the optical signal output to the first region may be reflected from the first PBS and the second PBS to be incident onto the projection lens.

In an embodiment, an S-wave reflected from the second PBS, of an optical signal output to the second region, may be absorbed by the second absorbing layer. A P-wave passing through the second PBS, of the optical signal output to the second region, may be incident onto the projection lens.

In an embodiment, the PGU may include: a display panel configured to radiate an unpolarized signal; a lower prism arranged spaced apart from the display panel and having a certain height; a prism arranged above the lower prism and comprising a mirror and a half mirror arranged therein; and a projection lens including a plurality of lenses arranged spaced apart from the prism. Unpolarized signals radiated from a first region, which is one side of the display panel, may be all reflected from the mirror and reflected by a certain percentage from the half mirror to be incident onto the projection lens. A remaining percentage of the unpolarized signal passed through the half mirror, of unpolarized signals radiated from the first region, which is another side of the display panel, may be incident onto the projection lens.

In an embodiment, the PGU may further include a second polarization conversion plate attached to an upper portion of the prism between the mirror and the PBS or attached to an upper portion of the prism between the first PBS and the second PBS and configured to synthesize the P-wave with the S-wave.

In an embodiment, the vehicle imaging device may further include a processor arranged in the vehicle and configured to control data included in an optical signal output from the PGU. The processor may control the PGU so that a first data set having a shape of the P-wave and a second data set having a shape of the S-wave are arranged alternately.

In an embodiment, the processor may control a first data set and a second data set to be alternately arranged in the one axial direction by inserting second data of the second data set between adjacent data constituting the first data set. The processor may display the image, which is implemented by the first data set and the second data set arranged alternately, in the specific region.

In an embodiment, the PGU may further include glass tiltably arranged between the polarization conversion plate and the prism in the first region of the display panel. The processor may control a tilt angle of the glass so that first pixels of the first data set and second pixels of the second data set are sequentially arranged.

In an embodiment, the processor may increase the tilt angle of the glass in case that a shift value of the second pixels, compared to the first pixels, is smaller than or equal to a first threshold value. The processor may decrease the tilt angle of the glass in case that a shift value of the second pixels, compared to the first pixels, is greater than or equal to a second threshold value. The first threshold value may be set to be smaller than 0.5 pixel, and the second threshold value may be set to be greater than 0.5 pixel.

A projector according to another aspect of the specification includes a picture generation unit (PGU) arranged inside the projector and configured to generate light to one side; and a processor operatively coupled to the PGU and configured to control the PGU such that a first data set and a second data set are arranged alternately. The processor may control the first data set and the second data set to be alternately arranged in one axial direction by inserting second data of the second data set between adjacent data constituting the first data set, and control an image implemented by the first data set and the second data set arranged alternately to be displayed in a specific region.

Details of other embodiments are included in the detailed description and drawings.

### Advantageous Effects of Invention

The technical features of a vehicle imaging device having a large aspect ratio using a projection optical system according to the specification will be summarized as follows.

According to the specification, more information can be provided through an image having a large aspect ratio at a position, which is close to a driver's visual field for driving, in an imaging device having a large aspect ratio for the driver.

According to the specification, an imaging device implemented by connecting a plurality of image modules can overcome the limitation of natural image implementation due to the lack of continuity at a connection portion of an image.

According to the specification, a continuous image associated with driving-related information can be implemented using a single image module in a specific region of a windshield in front of a vehicle.

According to the specification, a vehicle imaging device having a small and thin volume can be provided by using a projection optical system structure having a reflective structure and a screen panel offset to one side or another side.

According to the specification, a vehicle imaging device with a thin and small volume can be implemented using an ultra short throw (UST) projector and a special screen in a limited space inside a vehicle where a steering wheel, pedals, or CQT are placed.

The effects of the disclosure are not limited to those effects mentioned above, and other effects not mentioned may be clearly understood by those skilled in the art from the description of the appended claims.

### Brief Description of Drawings

FIG. 1 is a view illustrating appearance of a vehicle according to an embodiment.
FIG. 2 is a diagram illustrating appearance of a vehicle at various angles according to an embodiment.
FIGS. 3 and 4 are diagrams illustrating an inside of a vehicle according to an embodiment.
FIG. 5 is a block diagram illustrating a vehicle according to an embodiment.
FIG. 6A is a view of a configuration in which a screen of a certain ratio is formed in a specific region of front glass of a vehicle.
FIG. 6B is a view of a structure in which a vehicle imaging device for creating the screen of the certain ratio of FIG. 6A is arranged inside a dashboard of the vehicle.
FIG. 7 is a view of a structure in which a picture generation unit and internal components of the vehicle imaging device of FIG. 6B are arranged inside a cover.
FIG. 8A is a view of a structure in which the picture generation unit is arranged on a left side of a screen panel in the vehicle imaging device of FIG. 7.
FIG. 8B is a view of a structure in which the picture generation unit is arranged on a right side of the screen panel in the vehicle imaging device of FIG. 7.
FIG. 9A is a view of a structure in which a screen panel of a vehicle imaging device according to this specification includes a plurality of layers.
FIG. 9B is a view of a fresnel structure of a reflective layer of a screen panel according to this specification.
FIGS. 10A and 10B are views of embodiments in which a prism structure and a projection lens structure are arranged above a display panel.
FIGS. 11A and 11B are views of P-wave and S-wave optical signals in a PGU structure having a single PBS structure and a PGU structure having a double PBS structure, in the structure of FIG. 10A.
FIG. 11C is a view of P-polarized signals in mirror-type and half mirror-type PGU structures in the structure of FIG. 10A.
FIGS. 12A and 12B are views of P-wave and S-wave optical signals in a PGU structure having a single PBS structure and a PGU structure having a double PBS structure, in the structure of FIG. 10B.
FIG. 12C is a view of an unpolarized signal in mirror-type and half mirror-type PGU structures in the structure of FIG. 10A.
FIGS. 13A and 13B are views of a structure in which a second polarization conversion plate is further attached to an upper portion of a prism in FIGS. 11A and 11B.
FIGS. 14A and 14B are views of a structure in which a second polarization conversion plate is further attached to an upper portion of a prism in FIGS. 12A and 12B.
FIG. 15A compares images generated by first and second systems that do not perform pixel rearrangement.
FIG. 15B compares screens enlarged in one axial direction in the first and second systems of FIG. 15A.
FIG. 15C is a view of a configuration of a projector, which is an imaging device that performs pixel rearrangement.
FIGS. 16A and 16B compare structures of a PGU having a glass rotatable in one axial direction before and after the glass is rotated.
FIG. 17A is a view of a structure in which the glass of FIG. 16B is tilted by a certain angle and a pixel adjustment principle according to the structure.
FIG. 17B is a view of a structure in which pixels are shifted as the glass is adjusted in one axial direction and rotated in another axial direction.
FIGS. 18A and 18B compare images implemented in various shapes on a single panel or a dual panel.

### Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. The terms "module" and "unit" as used herein interchangeably or individually used to refer to a constituent element only for convenience in description in the specification and therefore are not themselves intended to take on different meanings or to depict different functions. In describing one or more embodiments disclosed herein, a detailed description of a related well-known technology will be omitted when it is determined that it would obscure the gist of the disclosure. The accompanying drawings are used to help easily understand the technical idea of the disclosure and it should be understood that the idea of the disclosure is not limited by the accompanying drawings. The idea of the disclosure should be construed to extend to any alterations, equivalents, and substitutes besides the accompanying drawings.

The terms including an ordinal number such as first, second, and the like may be used to describe various elements, but the elements should not be limited by those terms. The terms are used merely for the purpose of distinguishing one element from another.

It will be understood that when an element is referred to as being "connected with" another element, the element may be connected with the another element or intervening elements may also be present. In contrast, when an element is referred to as being "directly connected with" another element, there are no intervening elements present.

As used herein, the singular form is intended to include the plural forms as well, unless context clearly indicates otherwise.

In the present application, it should be further understood that the terms "comprises," "includes," etc. specify the presence of stated features, integers, steps, operations, elements, components, or combinations thereof, but do not preclude the presence or addition of one or more other features, integers, steps, operations, elements, components, or combinations thereof.

A vehicle according to an embodiment of the disclosure may be understood as a conception including automobiles, motorcycles, and the like. Hereinafter, the vehicle will be described based on a car.

The vehicle according to the embodiment of the disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

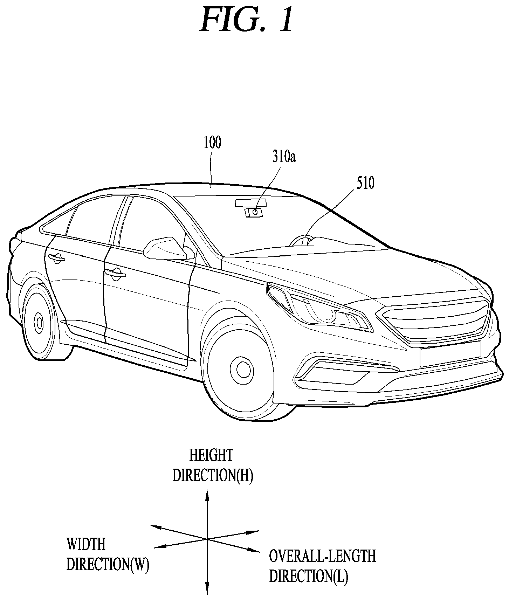

FIG. 1 is a view illustrating appearance of a vehicle according to an embodiment.

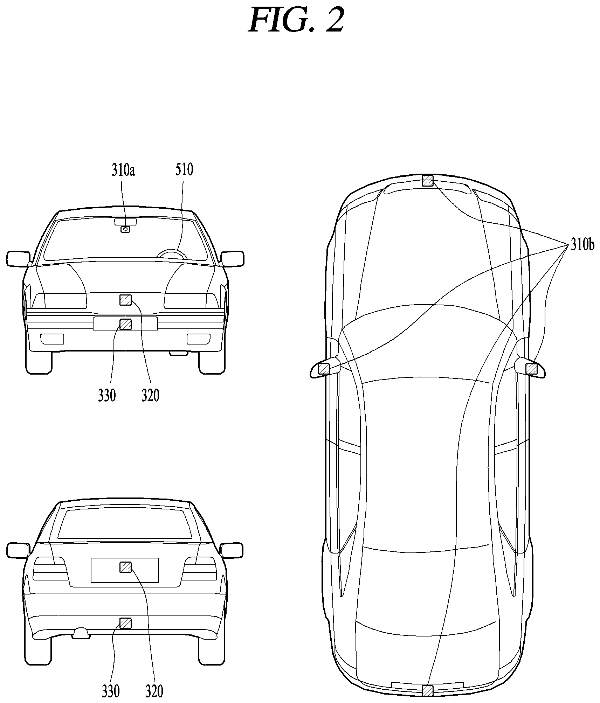

FIG. 2 is a diagram illustrating the appearance of the vehicle at various angles.

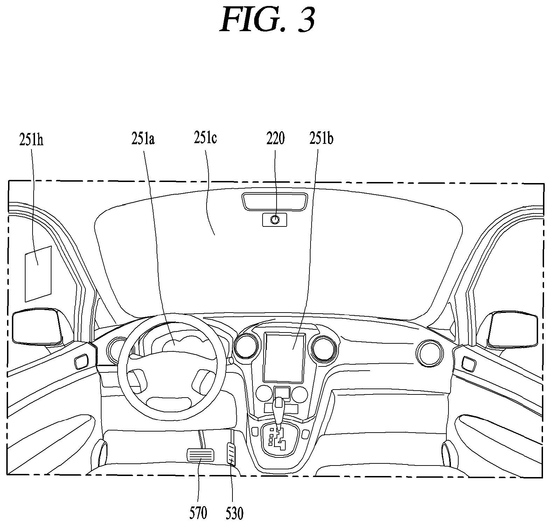

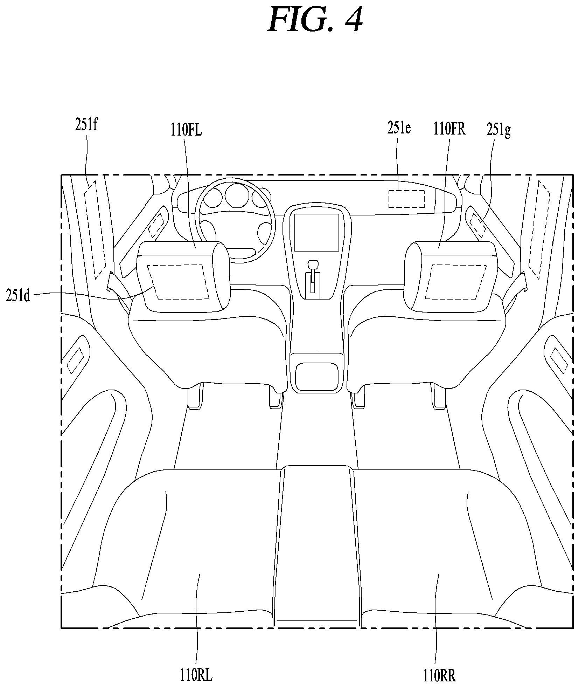

FIGS. 3 and 4 are diagrams illustrating an inside of a vehicle according to an embodiment.

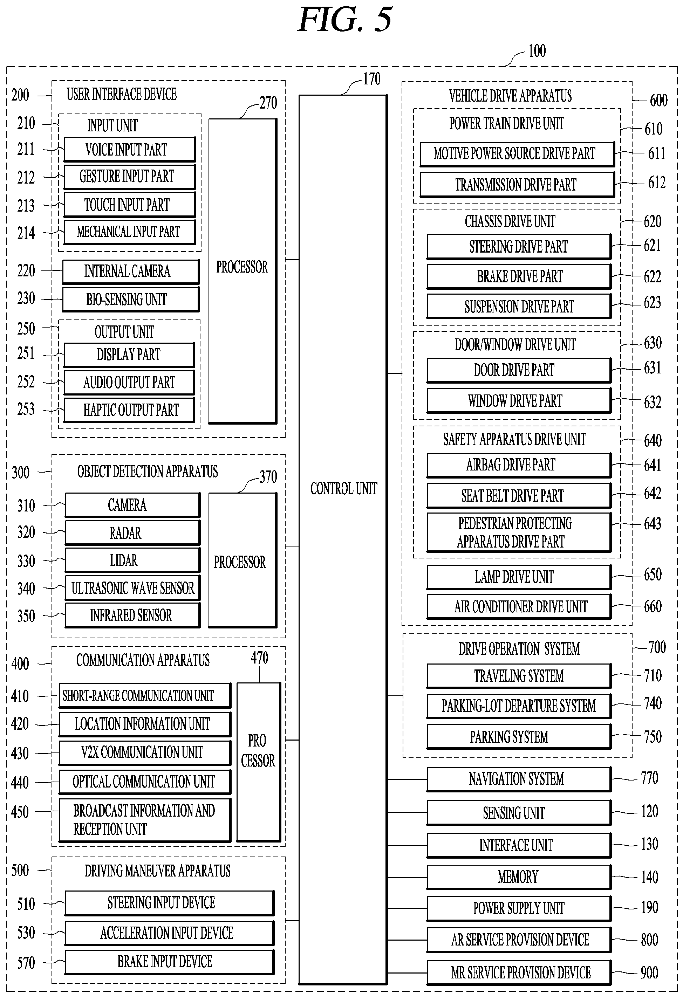

FIG. 5 is a block diagram illustrating a vehicle according to an embodiment.

As illustrated in FIGS. 1 to 5, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on traveling situation information. The traveling situation information may be generated based on object information provided from an object detection device 300.

For example, the vehicle 100 may be switched from the manual mode into the autonomous mode or from the autonomous module into the manual mode based on traveling situation information generated in the object detection device 300.

In an example, the vehicle 100 may be switched from the manual mode into the autonomous mode or from the autonomous mode into the manual mode based on traveling situation information received through a communication device 400.

The vehicle 100 may be switched from the manual mode into the autonomous mode or from the autonomous module into the manual mode based on information, data or signal provided from an external device.

When the vehicle 100 is driven in the autonomous mode, the vehicle 100 may be driven based on a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface device 200, an object detection device 300, a communication device 400, a driving operation device 500, a vehicle drive device 600, a driving system 700, a navigation system 770, a sensing unit 120, an interface unit 130, a memory 140, a controller 170, and a power supply unit 190.

According to embodiments, the vehicle 100 may include more components in addition to components to be explained in this specification or may not include some of those components to be explained in this specification.

The user interface device 200 is a device for communication between the vehicle 100 and a user. The user interface device 200 may receive a user input and provide information generated in the vehicle 100 to the user. The vehicle 100 may implement user interfaces (Uls) or user experiences (UXs) through the user interface device 200.

The user interface device 200 may include an input unit 210, an internal camera 220, a biometric detection unit 230, an output unit 250, and a processor 270.

According to embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be disposed on one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The audio input part 211 may convert a user's voice input into an electric signal. The converted electric signal may be provided to the processor 270 or the controller 170.

The audio input part 211 may include at least one microphone.

The gesture input part 212 may convert a user's gesture input into an electric signal. The converted electric signal may be provided to the processor 270 or the controller 170.

The gesture input part 212 may include at least one of an infrared sensor and an image sensor for detecting the user's gesture input.

According to embodiments, the gesture input part 212 may detect a user's three-dimensional (3D) gesture input. To this end, the gesture input part 212 may include a light-emitting diode outputting a plurality of infrared rays or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170

The touch input part 213 may include a touch sensor for detecting the user's touch input.

According to an embodiment, the touch input part 213 may be integrated with the display 251 so as to implement a touch screen. The touch screen may provide an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric detection unit 230 may acquire the user's biometric information. The biometric detection unit 230 may include a sensor for detecting the user's biometric information and acquire fingerprint information and heart rate information regarding the user using the sensor. The biometric information may be used for user authentication.

The output unit 250 may generate an output related to a visual, auditory, or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display and an e-ink display.

The display 251 may be inter-layered or integrated with a touch input part 213 to implement a touch screen.

The display 251 may be implemented as a head up display (HUD), a center information display (CID), a cluster, and/or a rear seat entertainment (RSE). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

In some examples, the user interface device 200 may include a plurality of displays 251a to 251g.

The display 251 may be arranged in one region of the steering wheel, one region 521a, 251b, 251e of the instrument panel, one region 251d of the seat, one region 251f of each pillar, one region 251g of the door, one region of the center console, one region of the headlining, or one region of the sun visor, or implemented in one region 251c of the windshield or one region 251h of the window.

Driving-related information for a driver may be displayed in one region 251a, 251b of the instrument panel. A personal infotainment display may be implemented in one region 251e of the instrument panel by a vehicle imaging device for a passenger seated in a front passenger seat. A personal infotainment display may be implemented in one region 251d of the seat by a vehicle imaging device for rear seat entertainment (RSE).

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user can recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

In some embodiments, the user interface device 200 may be named a display device for vehicle.

The user interface device 200 may operate under the control of the controller 170.

The object detection device 300 is a device for detecting an object located outside the vehicle 100.

Examples of the object may include a variety of objects associated with driving (operation) of the vehicle 100.

In some embodiments, a vehicle imaging device according to this specification will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or provide personal entertainment content in a front region of a passenger or rear seat of the vehicle.

To display such driving-related information or entertainment content in a specific region of the windshield at the front of the vehicle, the vehicle imaging device may need to have a large aspect ratio in which a width in one direction is a certain percentage greater than a length in another direction. However, there is a problem in that any position and any structure to provide the vehicle imaging device for constituting a screen with a large aspect ratio in the vehicle are not mentioned.

To solve these problems, an aspect of this specification is to provide a vehicle imaging device having a large aspect ratio using a projection optical system related to the vehicle. Another aspect of this specification is to display driving-related information on a screen having a large aspect ratio in a specific region of the windshield at the front of the vehicle. Still another aspect of this specification is to provide a vehicle imaging device having an optical structure and a special screen for allowing an image to have a large aspect ratio by using a single image module. Still another aspect of this specification is to implement continuous images related to driving-related information to have a large aspect ratio by using a single image module. Still another aspect of this specification is to provide a small and thin vehicle imaging device.

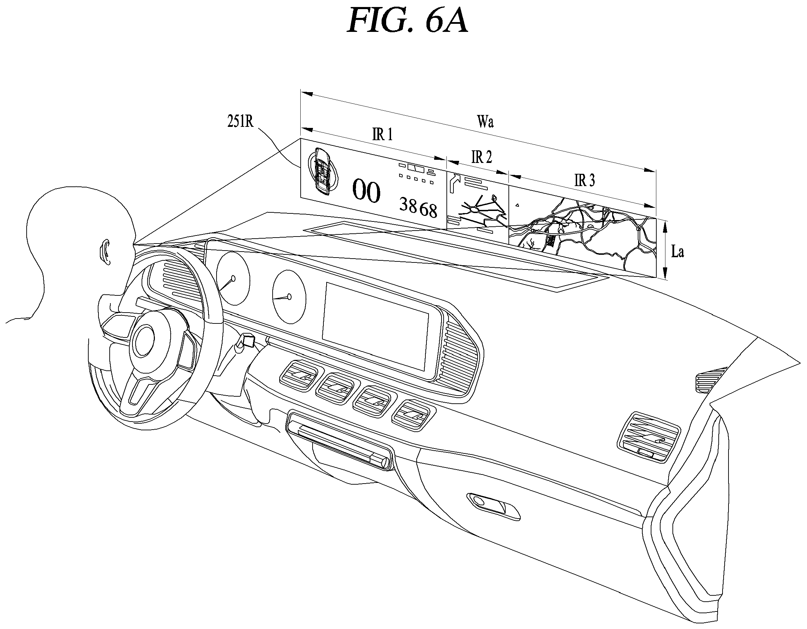

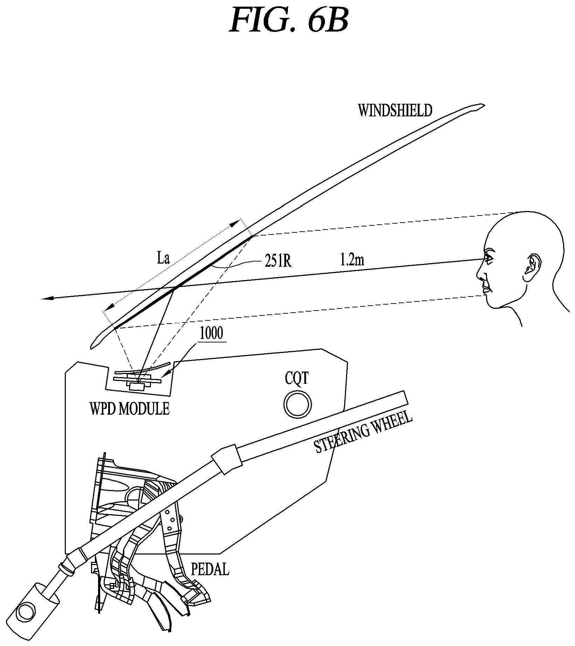

Hereinafter, a vehicle imaging device for achieving the aforementioned purposes will be described in detail with reference to the drawings. In this regard, FIG. 6A is a view of a configuration in which a screen of a certain ratio is formed in a specific region of front glass of a vehicle. FIG. 6B is a view of a structure in which a vehicle imaging device for creating the screen of the certain ratio of FIG. 6A is arranged inside a dashboard of the vehicle.

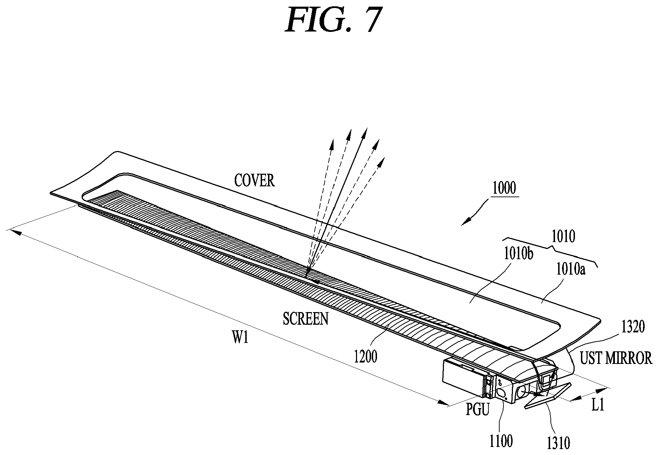

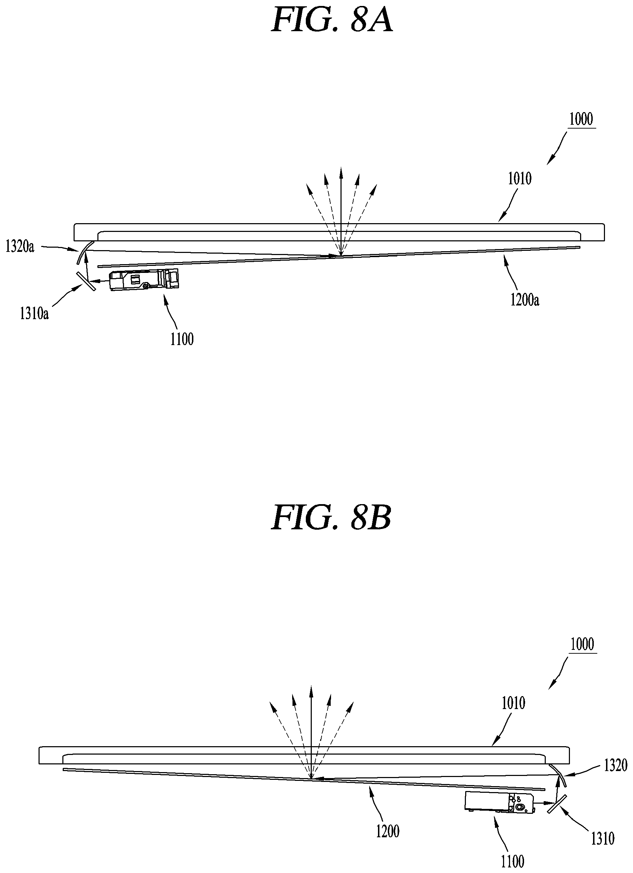

In some embodiments, FIG. 7 is a view of a structure in which a picture generation unit and internal components of the vehicle imaging device of FIG. 6B are arranged inside a cover. FIG. 8A is a view of a structure in which the picture generation unit is arranged on a left side of a screen panel in the vehicle imaging device of FIG. 7. FIG. 8B is a view of a structure in which the picture generation unit is arranged on a right side of the screen panel in the vehicle imaging device of FIG. 7.

Referring to FIG. 6A, an image having a width Wa in one axial direction and a length La in another axial direction may be displayed in a specific region 251R of a windshield of a vehicle. The image may be configured to include a plurality of image regions displaying information necessary for driving the vehicle. The plurality of image regions may include a first image region IR1 to a third image region IR3. A first image including vehicle-related information may be displayed in the first image region IR1 closest to a driver's visual field range in the vehicle. A second image associated with a vehicle driving path may be displayed in the second image region IR2. A third image associated with a map including an origin and a destination may be displayed in the third image region IR3. As the plurality of images are displayed in the specific region 251R, the width Wa in the one axial direction may be set to be longer than the length La in the another axial direction by a certain ratio, for example, at least 5 times.

Referring to FIGS. 6A and 6B, a vehicle imaging device 1000 may be arranged inside the dashboard of the vehicle. The vehicle video device 1000 may be arranged in a specific region inside the dashboard not to overlap a region where a steering wheel and pedals are arranged. An image by light, which is reflected from a screen panel 1200 constituting the vehicle imaging device 1000, may be displayed in the specific region 251R of the windshield of the vehicle. The specific region 251R may be implemented with a certain length La so that the image is displayed in the driver's visual field range. A distance from a center of the driver's gaze to a center of the specific region 251R may be defined as a certain distance, for example, approximately 1.2 m.

Referring to FIGS. 6A to 8B, the vehicle imaging device 1000 may be configured to include a cover 1010, a picture generation unit 1100, a screen panel 1200a, 1200, and a mirror 1300. The mirror 1300 may be implemented as a second mirror 1320a, 1320 having a curved shape. The mirror 1300 may alternatively be configured to include only one of a first mirror 1310a and a second mirror 1320a. The mirror 1300 may alternatively be configured to include only one of a first mirror 1310 and a second mirror 1320.

As another example, the mirror 1300 may be configured to include a first mirror 1310a, 1310 and a second mirror 1320a, 1320. The cover 1010 may form the appearance of the dashboard of the vehicle. The picture generation unit 1100, the screen panel 1200a, 1200, the first mirror 1310a, 1310, and the second mirror 1320a, 1320 may be arranged inside the cover 1010.

In some embodiments, the cover 1010 of the vehicle imaging device 1000 according to the specification may include a transmission region (or transparent region) through which optical signals including images are transmitted, and a non-transmission region (or opaque region) in which internal components are arranged. Referring to FIG. 7, the cover 1010 may include an opaque region 1010a and a transparent region 1010b.

Referring to FIGS. 6A to 8B, the opaque region 1010a may be formed in one side region and/or another side region corresponding to regions where the picture generation unit 1100 and the first and second mirrors 1310 and 1320 are arranged. The transparent region 1010b may be formed to correspond to a region where the screen panel 1200 is arranged. The opaque region 1010a may be formed to surround the transparent region 1010b. An image formed by reflection from the screen panel 1200 may pass through the transparent region 1010b of the cover 1010 to be displayed in the specific region 251R of the windshield in a passenger seat.

A picture generation unit (PGU) 1100 may be arranged inside the dashboard and configured to generate light to one side. The screen panel 1200a, 1200 may be arranged between the picture generation unit 1100 and the cover 1010. The screen panel 1200a, 1200 may reflect light generated by the picture generation unit 1100 so that an image by the reflected light passes through the cover 1010.

The mirror 1300 may be arranged on one side or another side of the picture generation unit 1100. The mirror 1300 may be configured to reflect light emitted to one side and transmit the light to the screen panel 1200. The mirror 1320a, 1320 formed in the curved shape may be configured to reflect light emitted to one side and transmit the light to the screen panel 1200.

The first mirror 1310a, 1310 may be arranged on one side or another side of the picture generation unit 1100. The first mirror 1310a, 1310 may be configured to change a light path by reflecting light emitted to the one side or another side of the picture generation unit 1100. The second mirror 1320a, 1320 may be arranged between the first mirror 1310a, 1310 and the screen panel 1200a, 1200. The second mirror 1320a, 1320 may be configured to reflect light reflected from the first mirror 1310a, 1310 and transmit the reflected light to the screen panel 1200a, 1200. An image by light reflected from the screen panel 1200a, 1200 may be displayed in the specific region 251R of the windshield of the vehicle in a manner that a width Wa of the image in one axial direction is greater than a length La in another axial direction. The specific region 251R of the windshield may be a region within the driver's visual field range in the vehicle.

Referring to FIG. 8A, the picture generation unit 1100 and the mirror 1320a may be arranged on a left side which is one side of the screen panel 1200a. The picture generation unit 1100, the first mirror 1310a, and the second mirror 1320a may be arranged on the left side which is the one side of the screen panel 1200a. The screen panel 1200a may be formed with a tilted structure in which a vertical distance to the cover 1010 decreases from left to right. The screen panel 1200a may be formed to have a positive slope from left to right. Light emitted from the picture generation unit 1100 may be reflected by the first mirror 1310a, the second mirror 1320a, and the screen panel 1200a, and may disperse within a certain angular range based on a direction perpendicular to the cover 1010.

Referring to FIGS. 7 and 8B, the picture generation unit 1100 and the mirror 1320 may be arranged on the right side which is another side of the screen panel 1200. The picture generation unit 1100, the first mirror 1310, and the second mirror 1320 may be arranged on the right side which is the another side of the screen panel 1200. The screen panel 1200 may be formed to have a negative slope from left to right. The screen panel 1200 may be formed with a tilted structure in which a vertical distance to the cover 1010 increases from left to right. Light emitted from the picture generation unit 1100 may be reflected by the first mirror 1310, the second mirror 1320, and the screen panel 1200, and may diffuse within a certain angular range based on the direction perpendicular to the cover 1010.

Referring to FIGS. 6 to 8B, the screen panel 1200a, 1200 may be formed inside the dashboard to have a first width W1 in one axial direction and a first length L1 in another axial direction. A ratio of the first width W1 in the one axial direction and the first length L1 in the another axial direction may be set as a first ratio. A ratio of the width Wa and the length La of an image displayed on a windshield may be set as a second ratio. A top of the image displayed on the windshield may be positioned lower than a center line of the windshield. The first and second ratios may be set to be at least 5:1.

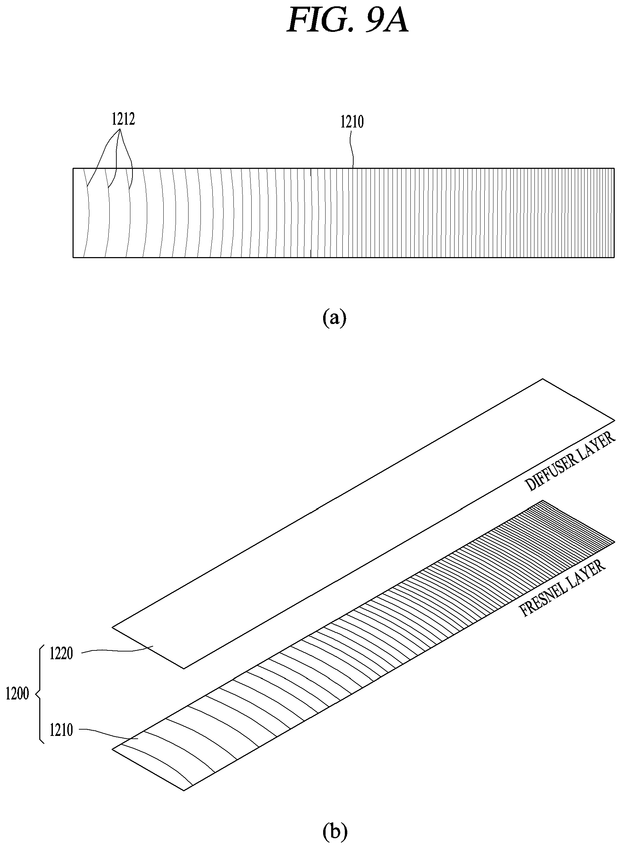

In some embodiments, in the vehicle imaging device according to the specification, the screen panel may include a plurality of layers. In this regard, FIG. 9A is a view of a structure in which a screen panel of a vehicle imaging device according to this specification includes a plurality of layers.

Referring to FIG. 7 through (a) of FIG. 9A, a reflective layer 1210 of the screen panel 1200 may have patterns 1212 arranged with being spaced apart from each other. The patterns 1212 of the reflective layer 1210 may constitute a partial area of an ellipse formed in one and another axial directions. The patterns 1212 of the reflective layer 1210 may be arranged spaced apart in the another axial direction.

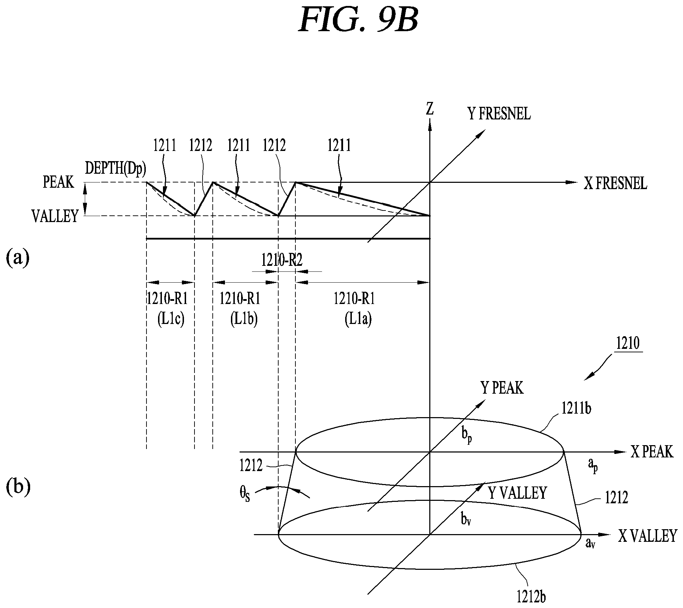

Referring to FIG. 7 through (b) of FIG. 9B, the screen panel 1200 may be configured to include a reflective layer 1210 and a diffusion layer 1220. The reflective layer 1210 may have a fresnel structure and may also be referred to as a fresnel layer. The reflective layer 1210 may be arranged so that the patterns formed in the another axial direction are spaced apart in the one axial direction. The diffusion layer 1220 may be arranged on one surface of the reflective layer 1210. A rear surface of the diffusion layer 1220 may be attached to the one surface of the reflective layer 1210.

FIG. 9B is a view of a fresnel structure of a reflective layer of a screen panel according to this specification. (a) of FIG. 9B is a cross-sectional view of the reflective layer 1210 of the screen panel. Referring to (a) of FIG. 9B, the reflective layer 1210 of the screen panel may be formed to have a certain depth Dp. The reflective layer 1210 may include first patterns 1211 in a first region 1210-R1 and second patterns 1212 in a second region 1210-R2. The first patterns 1211 may be formed as metal patterns and configured to reflect light. The second patterns 1212 may be formed as metal patterns or as non-metal patterns.

Referring to FIGS. 7 to 9B, light incident from the mirror 1300 in a desired direction may be reflected from the first patterns 1211. In another example, light incident in an undesired direction may be absorbed by the second patterns 1212 formed as the non-metal patterns. Accordingly, the light incident in the undesired direction may not be reflected from the reflective layer 1210 of the screen panel, thereby improving quality of the image displayed on the windshield.

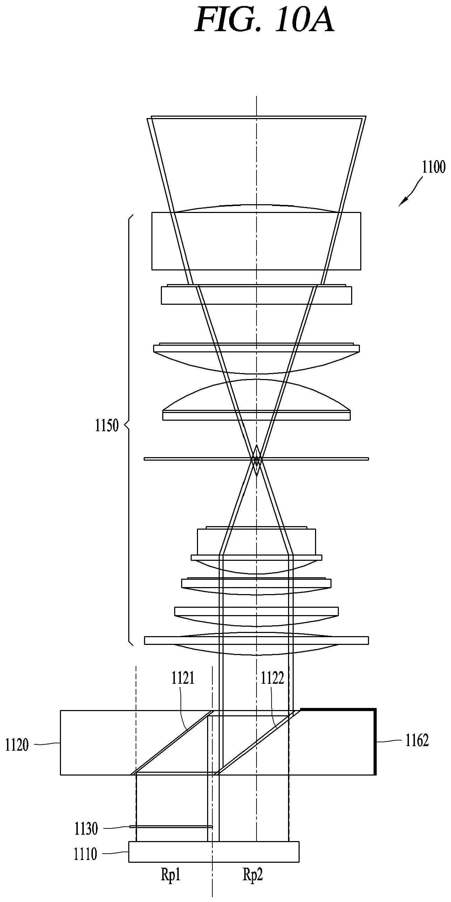

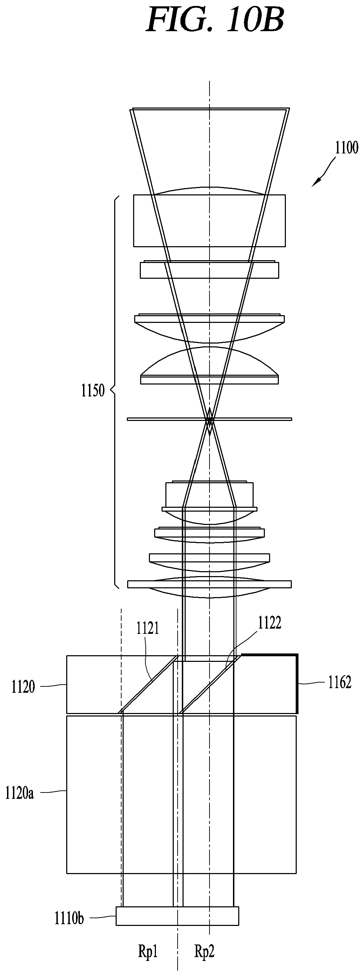

In the first region 1210-R1, the reflective layer 1210 may be formed as the first pattern 1211 having a first slope angle. In the second region 1210-R2, the reflective layer 1210 may be formed as the second pattern 1212 having a second slope angle greater than the first slope angle. The reflective layer 1210 may be formed in a structure in which the first pattern 1211 of the first region 1210-R1 and the second pattern 1212 of the second region 1210-R2 are repeatedly formed. Referring to FIGS. 7, 10A, and 10B, the patterns may be arranged such that a spacing between the patterns 1211 and 1212 of the reflective layer 1210 decreases as a vertical distance from the screen panel 1200 to the cover 1010 decreases.

The first pattern 1211 may be formed in a certain linear shape or parabolic shape.

(b) of FIG. 9B shows elliptical structures of upper and lower surfaces of the reflective layer 1210 of the screen panel and the second pattern 1212 on a side surface of the reflective layer 1210. Referring to (b) of FIG. 9B, a first boundary region 1211b formed on the upper surface of the reflective layer 1210 may be referred to as a peak structure. The first boundary region 1211b may have an elliptical structure. The first boundary region 1211b having the elliptical structure may be formed as bₚ²x²+aₚ²y² - aₚ²bₚ²=0. In this regard, aₚ denotes an x value of a peak at y=0 and bₚ denotes a y value of the peak at x=0. A third metal pattern 1213 formed on the lower surface may be referred to as a valley structure. A second boundary region 1212b may also have the elliptical structure. The second boundary region 1212b having the elliptical structure may be formed as bᵥ²x²+aᵥ²y² - aᵥ²bᵥ²=0. In this regard, aᵥ denotes an x value of a valley at y=0, and bᵥ denotes a y value of the valley at x=0.

Referring to FIGS. 6A to 9B, the reflective layer 1210 may have patterns 1211 formed to reflect light emitted from the picture generation unit 1100. The patterns 1211 may have a cross-section that is linear or parabolic and a front surface that is formed in an elliptical shape. The diffusion layer 1220 may be arranged on one surface of the reflective layer 1210, and may be configured so that light reflected from the reflective layer 1210 is diffused within a certain angular range based on the direction perpendicular to the cover 1010. The patterns 1211 may be formed such that lengths L1a, L1b, and L1c of the patterns 1211 of the reflective layer 1210 in the one axial direction decrease as a vertical distance from the screen panel 1200 to the cover 1010 decreases. The first slope angle of the patterns 1211 of the reflective layer 1210 may increase as the vertical distance from the screen panel 1200 to the cover 1010 decreases.

The reflective layer 1210 may include first patterns 1211 and second patterns 1212. The first patterns 1211 may have a cross-section formed in a linear or parabolic shape having a first slope angle and a front surface formed in an elliptical shape, and may be configured to reflect light. The second patterns 1212 may be arranged between the first patterns 1211. The second patterns 1212 may be formed in a linear or parabolic shape to have a second slope angle greater than the first slope angle of the first patterns 1211. The first patterns 1211 of the reflective layer 1210 in one side region where the picture generation unit 1100 is arranged may have a length that is longer than a length of the first patterns 1211 of the reflective layer 1210 in another side region.

In some embodiments, in the vehicle imaging device according to the specification, a picture generation unit PGU may produce an image through a prism structure and a projection lens structure arranged in the front surface of the display panel, so that the image may be displayed in a specific region of the windshield. In this regard, FIGS. 10A and 10B are views of embodiments in which a prism structure and a projection lens structure are arranged above a display panel.

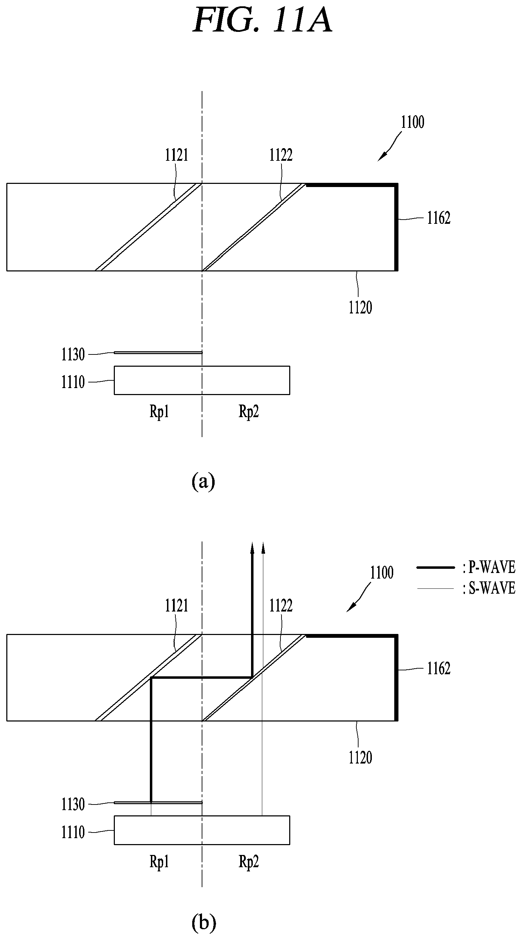

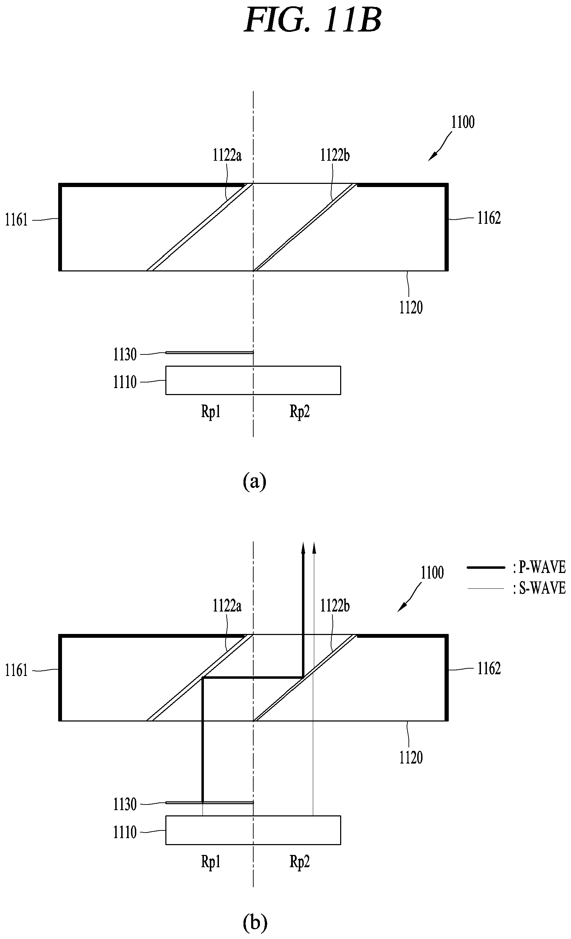

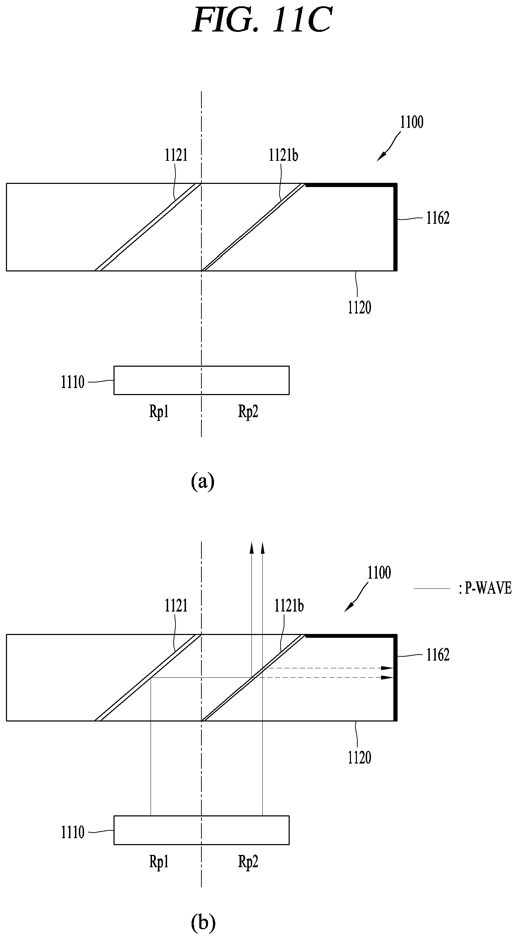

FIGS. 11A and 11B are views of P-wave and S-wave optical signals in a PGU structure having a single PBS structure and a PGU structure having a double PBS structure, in the structure of FIG. 10A. FIG. 11C is a view of P-polarized signals in mirror-type and half mirror-type PGU structures in the structure of FIG. 10A.

Referring to FIGS. 10A to 11C, a picture generation unit (PGU) 1100 may include a display panel 1110, a prism 1120, a polarization conversion plate 1130, and a projection lens 1150. The display panel 1110 may have an LCD structure. The prism 1120 may be arranged spaced apart from the display panel 1110.

Referring to FIGS. 10A and 11A, the prism 1120 may include a mirror 1121 and a polarization beam splitter (PBS) 1122 arranged therein. Referring to FIG. 11B, the prism 1120 may include a first PBS 1122a and a second PBS 1122 arranged therein.

Referring to FIGS. 10A to 11B, the polarization conversion plate 1130 may be arranged between the display panel 1110 and the prism 1120 to be parallel to the display panel 1110. The polarization conversion plate 1130 may be configured as a half-wave plate. The projection lens 1150 may include a plurality of lenses spaced apart from the prism 1120.

The display panel 1110 may include a first region Rp1 and a second region Rp2. The first region Rp1 may correspond to a region where the polarization conversion plate 1130 and the mirror 1121 (or the first PBS 1122a) are arranged. The second region Rp2 may correspond to a region where the PBS 1122 is arranged. One end of the polarization conversion plate 1130 may correspond to one end of the display panel 1110. Another end of the polarization conversion plate 1130 may correspond to the center of the display panel 1110.

An S-wave that passes through the polarization conversion plate 1130 in the first region Rp1 may be reflected from the mirror 1121 (or the first PBS 1122a) and the PBS 1122 to be incident onto the projection lens 1150. A P-wave output from the second region Rp2 may pass through the PBS 1122 to be incident onto the projection lens 1150. The prism 1120 may include a first absorption layer 1161 attached to upper and side surfaces of the prism 1120 corresponding to the first region Rp1. The prism 1120 may include a second absorption layer 1162 attached to upper and side surfaces of the prism 1120 corresponding to the second region Rp2. Ends of the first absorption layer 1161 and the second absorption layer 1162 may extend up to points, at which upper ends of the mirror 1121 (or the first PBS 1122a) and the PBS 1122 are located, respectively. Accordingly, a first length of a side portion of the first absorption layer 1161 may be longer than a second length of a side portion of the second absorption layer 1162.

Referring to FIGS. 10A and 11C, the prism 1120 may include a mirror 1121 and a half mirror 1121b arranged inside. The mirror 1121 may be configured as a full mirror that reflects all of optical signals. The half mirror 1121b may be configured to reflect a certain percentage (e.g., 50%) of optical signals. The half mirror 1121b may be configured to reflect a certain percentage of optical signals and allow the remaining percentage of optical signals to pass therethrough.

The display panel 1110 may be configured to radiate P-polarized signals. The P-polarized signals radiated from the first region Rp1, which is one side of the display panel 1110, may be fully reflected from the mirror 1121 and reflected by a certain percentage from the half mirror 1121b, thereby being incident onto the projection lens 1150. The remaining percentage of the P-polarized signals which have passed through the half mirror 1121 may be reflected from the absorption layer 1162. The P-polarized signals radiated from the second region Rp2 of the display panel 1110 may be reflected by a certain percentage from the half mirror 1121 and reflected from the absorption layer 1162. Among the P-polarized signals radiated from the second region Rp2, which is another side of the display panel 1110, the remaining percentage of the P-polarized signals that have passed through the half mirror 1121 may be incident onto the projection lens 1150.

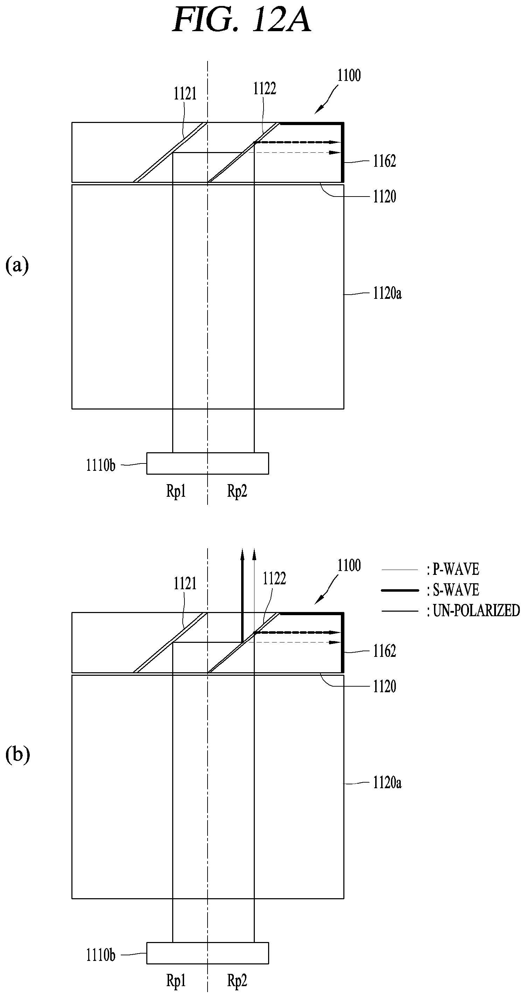

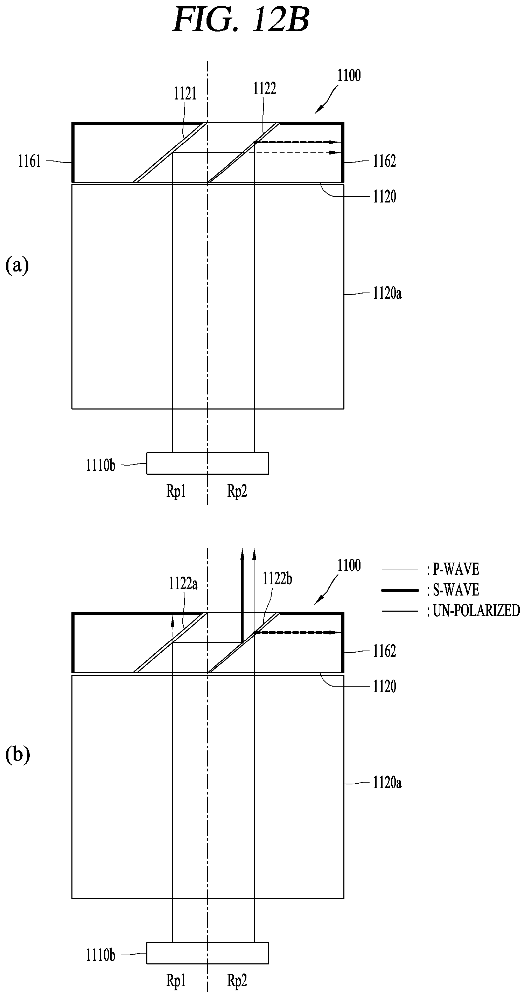

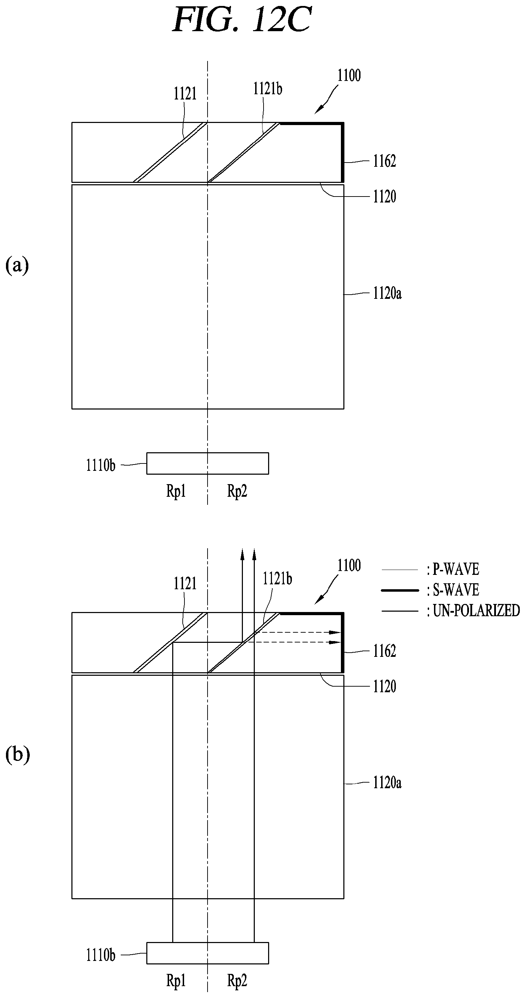

FIGS. 12A and 12B are views of P-wave and S-wave optical signals in a PGU structure having a single PBS structure and a PGU structure having a double PBS structure, in the structure of FIG. 10B. FIG. 12C is a view of unpolarized signals in mirror-type and half mirror-type PGU structures in the structure of FIG. 10A.

Referring to FIGS. 10B and 12A to 12C, the picture generation unit (PGU) 1100 may include a display panel 1110b, a lower prism 1120a, a prism 1120, and a projection lens 1150. The display panel 1110b may be formed as a DM or liquid crystal on silicon (LCos) structure. The lower prism 1120a may be positioned spaced apart from the display panel 1110 and may be formed to have a certain height. The lower prism 1120a may be configured as a total internal reflection (TIR) prism. The prism 1120 may be arranged above the lower prism 1120a. The prism 1120 may include a first PBS 1122a and a second PBS 1122b. The projection lens 1150 may include a plurality of lenses spaced apart from the prism 1120.

The display panel 1110b may include a first region Rp1 and a second region Rp2. The first region Rp1 may correspond to a region where the first PBS 1122a is arranged. The second region Rp2 may correspond to a region where the second PBS 1122b is arranged. An upper end of the first PBS 1122a may correspond to the center of the display panel 1110b. A lower end of the second PBS 1122b may correspond to the center of the display panel 1110b.

Referring to FIGS. 10B and 12A, the first PBS may be implemented as the mirror 1121. Accordingly, the mirror 1121 and the second PBS 1122b may be formed inside the prism 1120. The prism 1120 may include an absorption layer 1162 attached to upper and side surfaces of the prism 1120 corresponding to the second region Rp2. Among the optical signals output to the first region Rp1, the P-wave may be reflected from the mirror 1121 arranged in the first region Rp1 of the prism 1120 and pass through the second PBS 1122b to be absorbed by the absorption layer 1162. Among the optical signals output to the first region Rp1, the S-wave may be reflected from the mirror 1121 and reflected from the second PBS 1122b to be incident onto the projection lens 1150.

Among the optical signals output to the second region Rp2, the S-wave reflected from the second PBS 1122b may be absorbed by the absorption layer 1162. Among the optical signals output to the second region Rp2, the P-wave that have passed through the second PBS 1122b may be incident onto the projection lens 1150.

Referring to FIGS. 10B and 12B, the prism 1120 may include a first absorption layer 1161 and a second absorption layer 1162. The first absorption layer 1161 may be attached to upper and side surfaces of the prism 1120 corresponding to the first region Rp1. The second absorption layer 1162 may be attached to upper and side surfaces of the prism 1120 corresponding to the second region Rp2. Among the optical signals output to the first region Rp1, the P-wave may pass through the first PBS 1122a arranged in the first region Rp1 and may be absorbed by the first absorption layer 1161 formed on the upper portion of the prism 1120. Among the optical signals output to the first region Rp1, the S-wave may be reflected from the first PBS 1122a and the second PBS 1122b to be incident onto the projection lens 1150.

Among the optical signals output to the second region Rp2, the S-wave reflected from the second PBS 1122b may be absorbed by the second absorption layer 1162. Among the optical signals output to the second region Rp2, the P-wave that have passed through the second PBS 1122b may be incident onto the projection lens 1150.

Referring to FIGS. 10B and 12C, the prism 1120 may include a mirror 1121 and a half mirror 1121b arranged inside. The mirror 1121 may be configured as a full mirror that reflects all of optical signals. The half mirror 1121b may be configured to reflect a certain percentage (e.g., 50%) of optical signals. The half mirror 1121b may be configured to reflect a certain percentage of optical signals and allow the remaining percentage of optical signals to pass therethrough.

The display panel 1110 may be configured to radiate unpolarized signals. The unpolarized signals radiated from the first region Rp1, which is one side of the display panel 1110, may be fully reflected from the mirror 1121 and reflected by a certain percentage from the half mirror 1121b, thereby being incident onto the projection lens 1150. The remaining percentage of the unpolarized signals which have passed through the half mirror 1121 may be reflected from the absorption layer 1162. The unpolarized signals radiated from the second region Rp2 of the display panel 1110 may be reflected by a certain percentage from the half mirror 1121 and reflected from the absorption layer 1162. Among the unpolarized signals radiated from the second region Rp2, which is another side of the display panel 1110, the remaining percentage of the unpolarized signals that have passed through the half mirror 1121 may be incident onto the projection lens 1150.

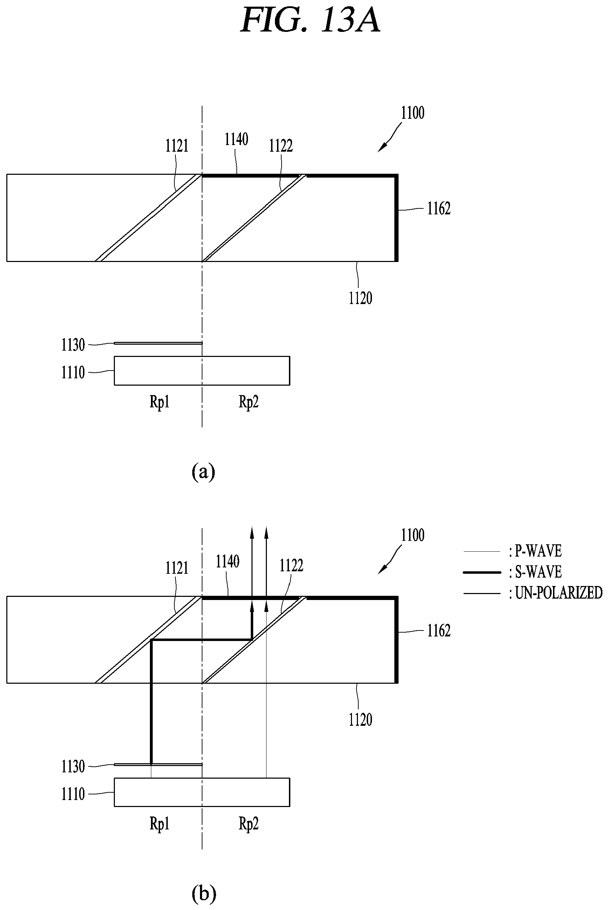

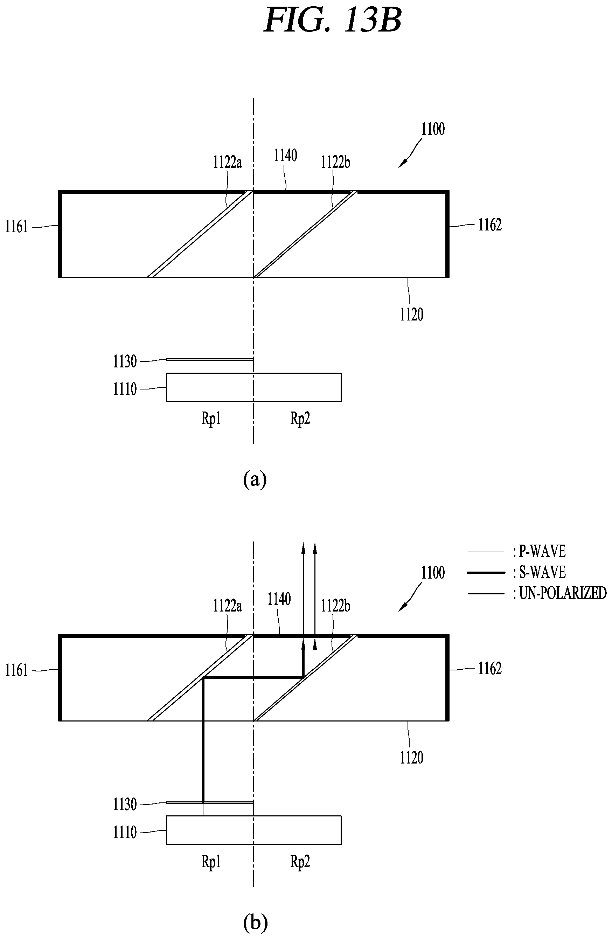

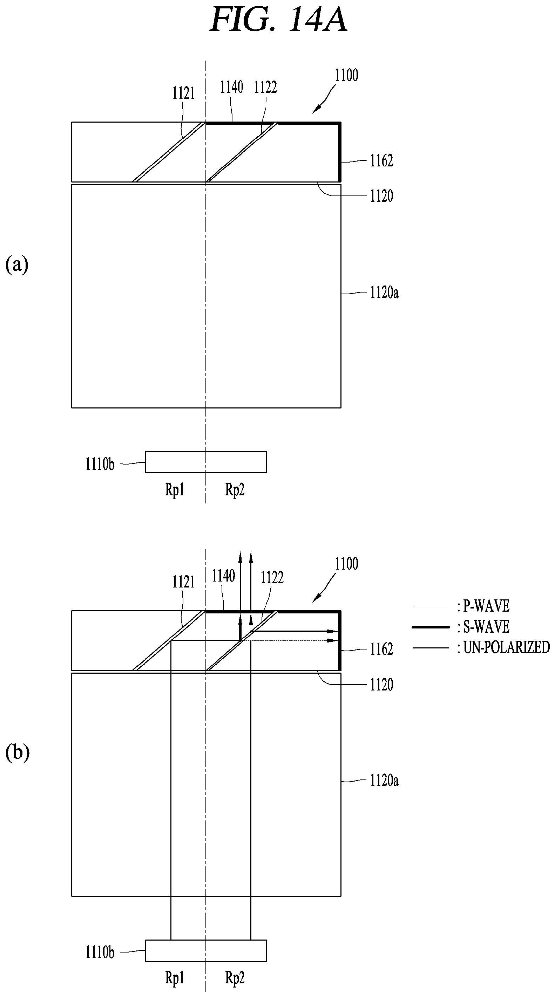

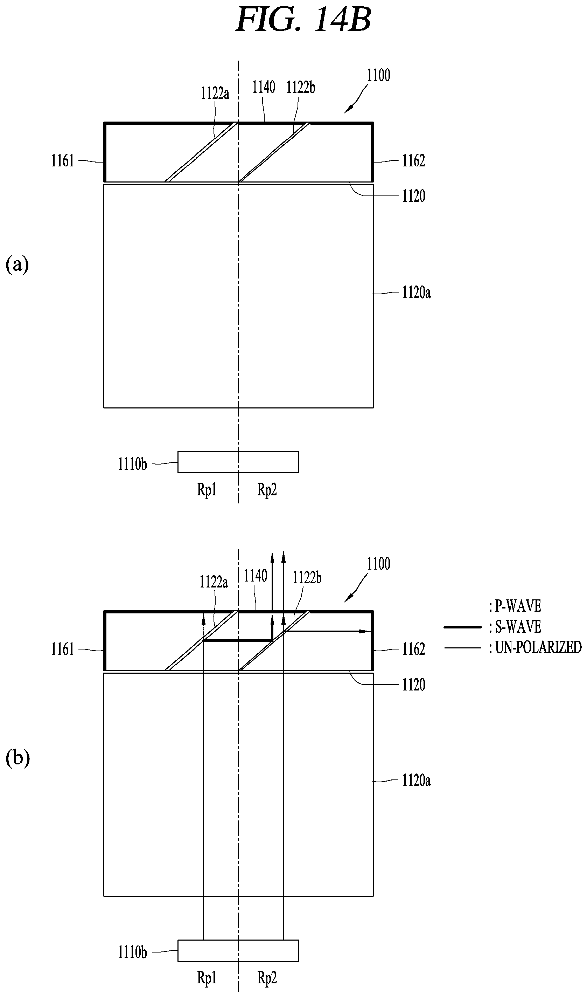

In some embodiments, in the vehicle imaging device according to the specification, a second polarization conversion plate may be further attached above the prism of the picture generation unit (PGU). In this regard, FIGS. 13A and 13B are view of a structure in which a second polarization conversion plate is further attached above the prism in FIGS. 11A and 11B. FIGS. 14A and 14B are view of a structure in which a second polarization conversion plate is further attached above the prism in FIGS. 12A and 12B.

Referring to FIGS. 13A to 14B, the PGU 1100 may further include a second polarization conversion plate 1165. Referring to FIGS. 13A and 14A, the second polarization conversion plate 1165 may be attached to the top of the prism 1120 between the mirror 1121 and the PBS 1122. The second polarization conversion plate 1165 may be configured to synthesize the P-wave reflected from the mirror 1121 and the PBS 1122 with the S-wave passing through the PBS 1122. The second polarization conversion plate 1165 may be implemented as a quarter-wave plate (QWP) or a half-wave plate (HWP).

One end of the second polarization conversion plate 1165 may be arranged at a point corresponding to the top of the mirror 1121. Another end of the second polarization conversion plate 1165 may be arranged at a point corresponding to the top of the PBS 1122. The another end of the second polarization conversion plate 1165 may be arranged at a point corresponding to an end of the absorption layer 1162 formed on the upper portion of the prism 1120.

Referring to FIGS. 13B and 14B, the second polarization conversion plate 1165 may be attached to the top of the prism 1120 between the first PBS 1122a and the second PBS 1122b. The second polarization conversion plate 1165 may be configured to synthesize the P-wave reflected from the first PBS 1122a and the second PBS 1122b with the S-wave passing through the second PBS 1122b. One end of the second polarization conversion plate 1165 may be arranged at a point corresponding to the top of the first PBS 1122a. The one end of the second polarization conversion plate 1165 may be arranged at a point corresponding to an end of the first absorption layer 1161 formed on the upper portion of the prism 1120. Another end of the second polarization conversion plate 1165 may be arranged at a point corresponding to the top of the second PBS 1122b. The another end of the second polarization conversion plate 1165 may be arranged at a point corresponding to an end of the second absorption layer 1162 formed on the upper portion of the prism 1120.

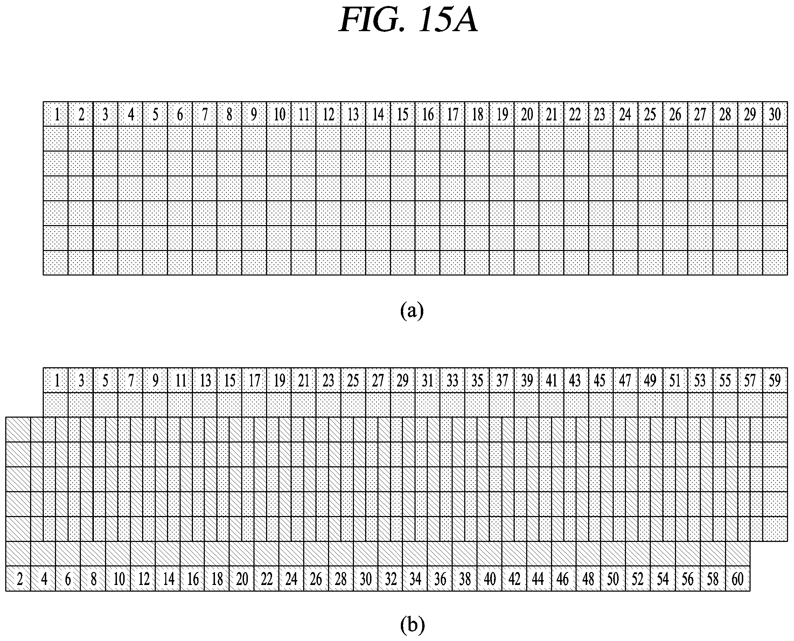

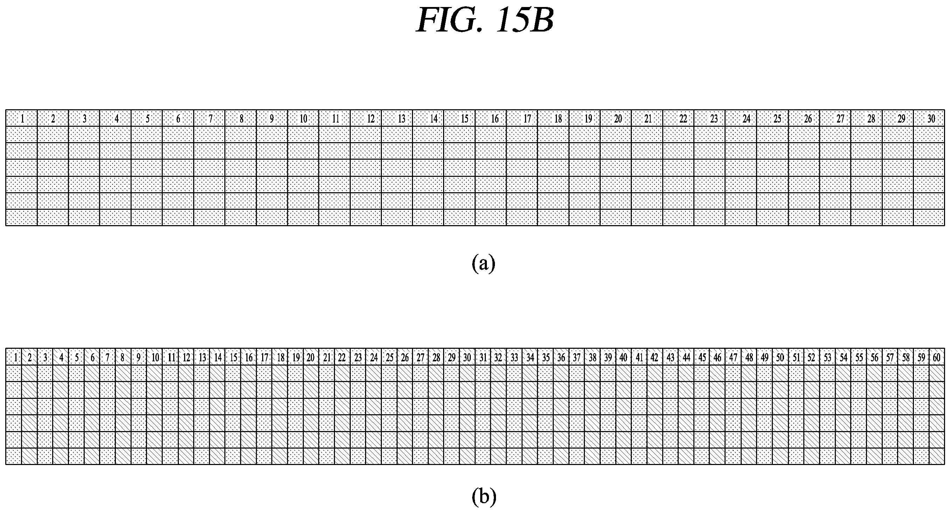

In some embodiments, the processor of the vehicle having the vehicle imaging device according to the specification may be configured to control data included in an optical signal output from the picture generation unit (PGU). In this regard, FIG. 15A compares images generated by first and second systems that do not perform pixel rearrangement. FIG. 15B compares screens enlarged in one axial direction in the first and second systems of FIG. 15A.

Referring to (a) of FIG. 15A, a first image generated in a first system that does not perform pixel rearrangement may include a plurality of columns. The first image that includes the plurality of columns may be formed with a first width in one axial direction and a first length in another axial direction.

Referring to (b) of FIG. 15A, a second image generated by a second system that performs pixel rearrangement may include a plurality of columns. The second image which include the plurality of columns may include a first data set and a second data set. The first data set may be formed with a first width in one axial direction and a first length in another axial direction. The second data set may also be formed with the first width in the one axial direction and the first length in the another axial direction. In this regard, pixel rearrangement may be performed in a state in which starting points of the first data set and the second data set do not match.

Referring to (a) of FIG. 15B, the first image generated by the first system that does not perform the pixel rearrangement may be deformed to increase in width in the one axial direction to be displayed in a specific region of the windshield of the vehicle. Therefore, the first image, which is stretched in width in the one axial direction, may have a reduced resolution in a direction of a horizontal axis. The stretched first image may be formed with a second width in the one axial direction and the first length in the another axial direction. The stretched second width may be set to about twice the first width.

Referring to (b) of FIG. 15B, the first data set and the second data set of the second image generated by the second system that performs the pixel rearrangement may be arranged alternately. In this regard, pixel alignment may be performed after the pixel rearrangement is performed. As the pixel alignment is performed, the starting point of the first data set and the starting point of the second data set may be aligned with each other. As the pixel rearrangement and the pixel alignment are performed, the first data set and the second data set of the second image may be alternately arranged in the aligned state.

Referring to FIGS. 5 and 10A to 15B, the processor 170, 270 equipped in the vehicle may be configured to control data included in an optical signal output from the PGU 1100.

The processor 170, 270 may be arranged in the vehicle and configured to control data included in an optical signal output from the PGU 1100. The processor 170, 270 may control the PGU 1100 so that a first data set having a P-wave shape and a second data set having an S-wave shape are arranged alternately. Accordingly, the second image, in which the first data set and the second data set are alternately arranged, may be formed with the second width in the one axial direction and the first length in the another axial direction. Although the width increases in the one axial direction, the second image may maintain its resolution in the horizontal axis direction by virtue of the alternate arrangement of the first and second data sets.

The processor 170, 270 may control second data of the second data set to be inserted between adjacent data constituting the first data set, such that the first data set and the second data set are arranged alternately in the one axial direction. The processor 170, 270 may display an image, which is formed by the first data set and the second data set arranged alternately, in a specific region of the windshield.

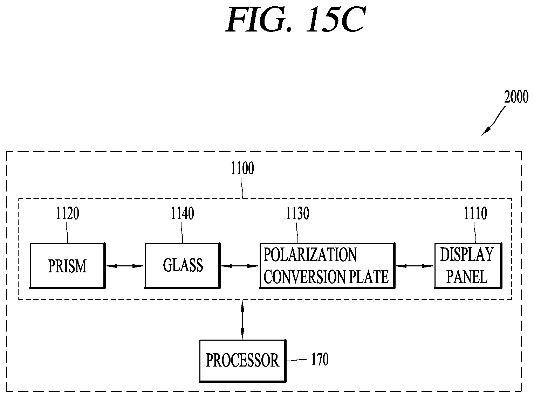

In some embodiments, an imaging device performing pixel rearrangement according to the specification may be implemented as a projector. In this regard, FIG. 15C is a view of a configuration of a projector, which is an imaging device that performs pixel rearrangement. Referring to FIG. 15C, a projector 2000 may include a picture generation unit (PGU) 1100 and a processor 170. The projector 2000 may be configured to further include the cover 1010, the screen panel 1200a, 1200, and the mirror 1300 of FIGS. 7 to 9B. The projector 2000, as illustrated in FIGS. 10A to 14B, may include the display panel 1110, 1110b, the prism 1120, 1120a, the polarization conversion plate 1130, the glass 1140, and the projection lens 1150.

The PGU 1100 may be arranged inside the projector 2000 and may be configured to generate light to one side or another side. The processor 170 may be operably coupled with the PGU 1100. The processor 170 may be configured to control the PGU 1100 so that the first data set and the second data set are arranged alternately. The first data set and the second data set may be configured to have the P-wave shape and the S-wave shape, respectively, but are not limited thereto.

The processor 170 may control second data of the second data set to be inserted between adjacent data constituting the first data set, such that the first data set and the second data set are arranged alternately in the one axial direction. The processor may control an image, which is formed by the first data set and the second data set arranged alternately, to be displayed in a specific region of a screen.

The glass 1140 of the PGU 1100 may be tiltably arranged between the polarization conversion plate 1130 and the prism 1120 in a first region of the display panel 1110. The processor 170 may control a tilt angle of the glass 1140 so that first pixels of the first data set and second pixels of the second data set are sequentially arranged. The processor 170 may increase the tilt angle of the glass 1140 in case that a shift value of the second pixels is less than or equal to a first threshold value, compared to the first pixels. The processor 170 may decrease the tilt angle of the glass 1140 in case that the shift value of the second pixels is greater than or equal to a second threshold value, compared to the first pixels. The first threshold value may be set to be less than 0.5 pixel, and the second threshold value may be set to be greater than 0.5 pixel, but are not limited thereto.

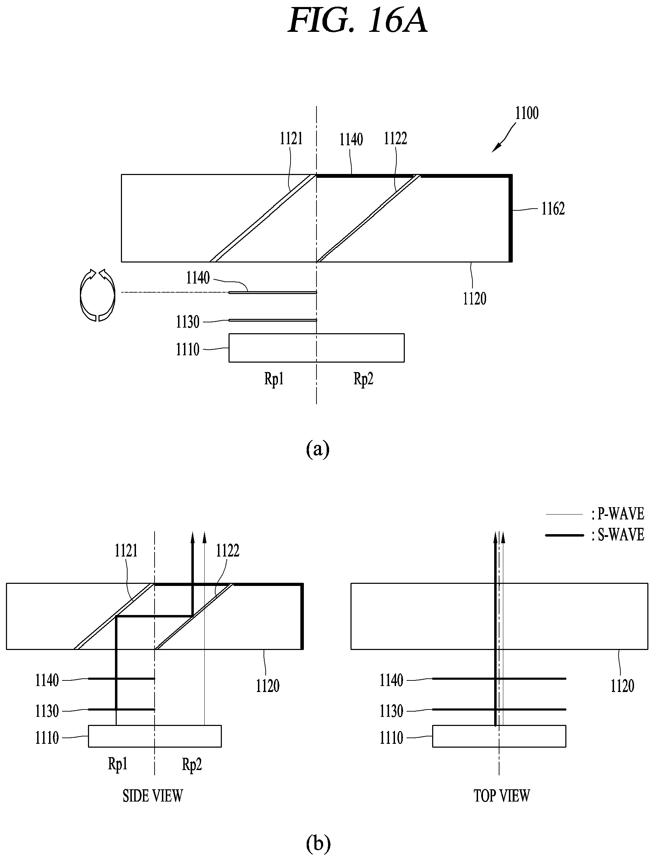

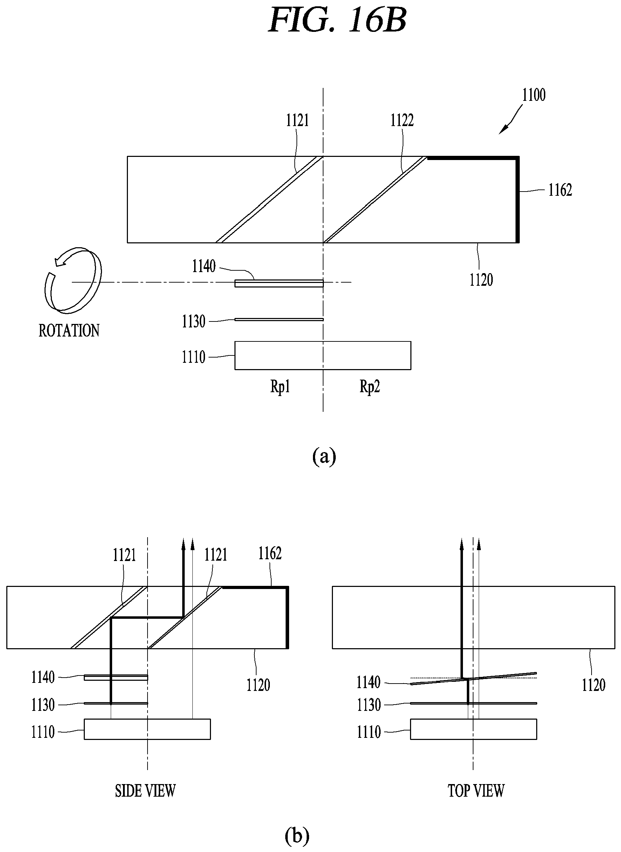

In some embodiments, in the picture generation unit (PGU) of the vehicle imaging device according to the specification, an angle-adjustable glass may be arranged in a lower region of the prism to enable shifting of pixels. In this regard, FIGS. 16A and 16B compare structures before and after glass is rotated in a PGU having the glass which is rotatable in one axial direction.

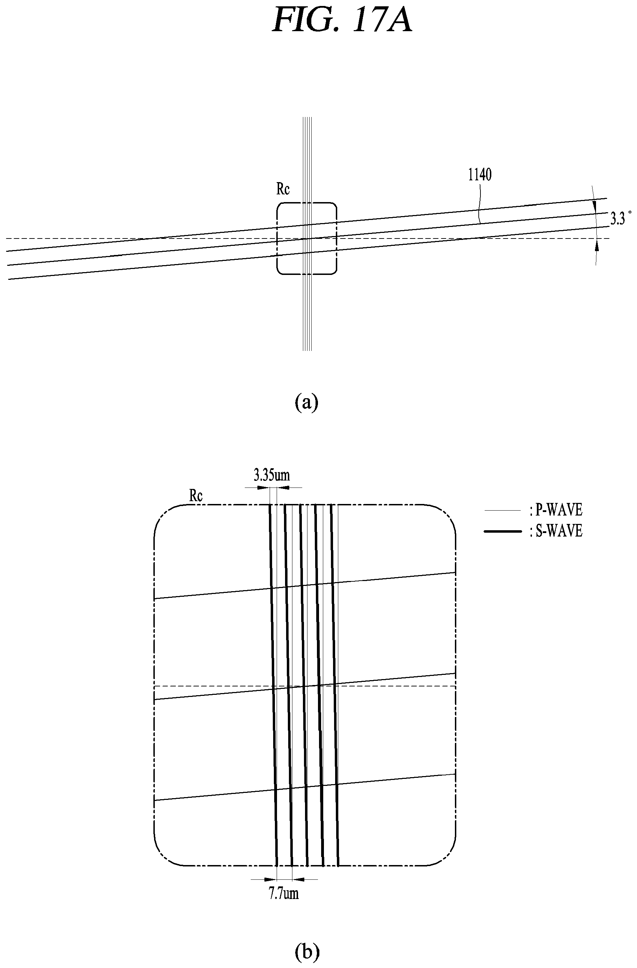

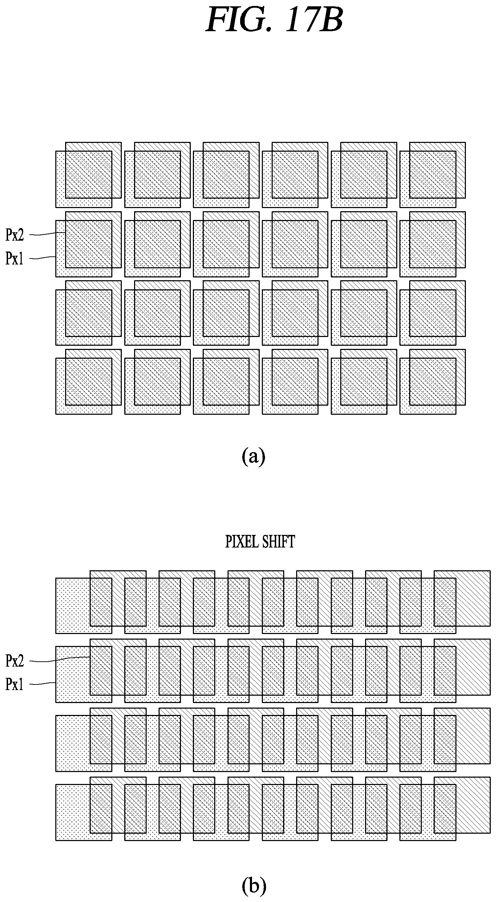

FIG. 17A is a view of a structure in which the glass of FIG. 16B is tilted by a certain angle and a pixel adjustment principle according to the structure. FIG. 17B is a view of a structure in which pixels are shifted as the glass is adjusted in one axial direction and rotated in another axial direction.

Referring to (a) of FIG. 16A, the PGU 1100 may include a display panel 1110, a prism 1120, a polarization conversion plate 1130, and glass 1140. The glass 1140 may be horizontally placed between the polarization conversion plate 1130 and the prism 1120 in the first region Rp1 of the display panel 1110.

Referring to (b) of FIG. 16A, the P-wave that passes through the polarization conversion plate 1130 and the glass 1140 in the first region Rp1 may be reflected from the mirror 1121 and the PBS 1122 and transmitted to the second region Rp2. The S-wave passing through the PBS 1122 may be transmitted to the second region Rp2.

Referring to FIG. 16A and (a) of FIG. 16C, before the glass 1140 is rotated (tilted), the first pixels Px1 of the first data set and the second pixels Px2 of the second data set may overlap each other in the one axial direction and/or the another axial direction or be spaced apart by a value less than a threshold value.

Referring to (a) of FIG. 16B, the PGU 1100 may include the display panel 1110, the prism 1120, the polarization conversion plate 1130, and the glass 1140. The glass 1140 may be tilted (adjusted) by a certain angle relative to a horizontal plane between the polarization conversion plate 1130 and the prism 1120 in the first region Rp1 of the display panel 1110.

Referring to (b) of FIG. 16B, the P-wave that passes through the polarization conversion plate 1130 and the glass 1140 in the first region Rp1 may be reflected from the mirror 1121 and the PBS 1122 and transmitted to the second region Rp2. The S-wave passing through the PBS 1122 may be transmitted to the second region Rp2. A phase difference may be generated between the P-wave and S-wave as the glass 1140 is tilted (adjusted) by a certain angle relative to the horizontal plane.

(a) of FIG. 17A illustrates a structure in which the glass 1140 is tilted by a certain angle. (b) of FIG. 17A illustrates pixels of a data set associated with an optical signal passing through the glass 1140 in a certain region Rc based on a center point of the glass 1140.

Referring to FIG. 16B and (a) of FIG. 17A, the glass 1140 may have a predetermined thickness (e.g., 0.2 mm). The glass 1140 may be tilted (adjusted) by a certain angle (e.g., 3.3°) relative to the horizontal plane. Referring to FIG. 16B to (b) of FIG. 17A, the pixels may be spaced apart by a first interval (e.g., 7.7 um). As the glass 1140 is tilted by the certain angle (e.g., 3.3°) relative to the horizontal plane, the pixel positions may be shifted by a second interval (e.g., 3.35 um) in a sequential pixel shifting manner. As the glass 1140 is tilted by the certain angle, the P-wave signal and the S-wave signal passing through the glass 1140 may be shifted by the second interval.

Referring to FIGS. 16B and 17B, as the glass 1140 is rotated (tilted), the shift may occur or may be adjusted between the first pixels Px1 of the first data set associated with the P-wave and the second pixels Px2 of the second data set associated with the S-wave.

Referring to FIG. 5 and FIGS. 10A to 17B, the processor 170, 270 may control the tilt angle of the glass 1140 so that the first pixels Px1 of the first data set and the second pixels Px2 of the second data set are sequentially arranged.

The processor 170, 270 may control the tilt angle of the glass 1140 to increase in case that the shift value of the second pixels Px2 is smaller than or equal to a first threshold value, compared to the first pixels Px1. The processor 170, 270 may control the tilt angle of the glass 1140 to decrease in case that the shift value of the second pixels Px2 is greater than or equal to a second threshold value, compared to the first pixels Px1. The first threshold value may be set to be smaller than 0.5 pixel, and the second threshold value may be set to be greater than 0.5 pixel.

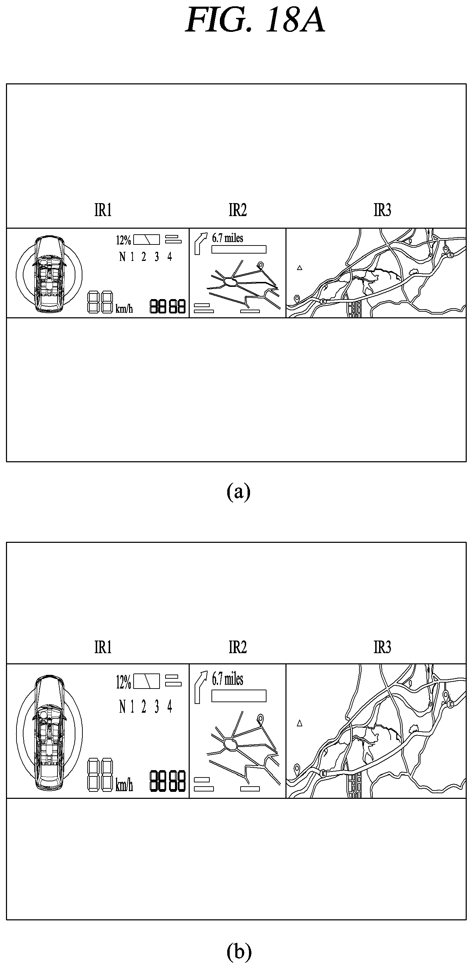

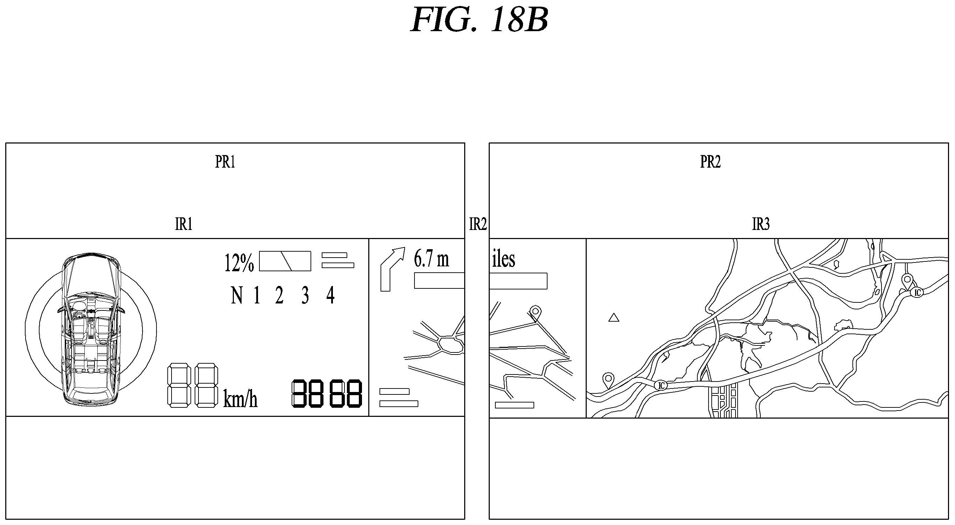

In some embodiments, an image displayed in a specific region of the windshield by the vehicle imaging device implementing the pixel rearrangement according to the specification may be projected in a wide panel display (WPD) structure, in which a width in one axial direction is greater than or equal to a length in another axial direction by a certain ratio. In this regard, FIGS. 18A and 18B compare images projected in various forms on a single panel or a dual panel.

Referring to (a) of FIG. 18A, a first image including a first image region IR1 to a third image region IR3 may be displayed on a single panel. The first image region IR1 to the third image region IR3 may not be physically separated regions, but may be implemented as virtual image regions displayed on the single panel. The single panel may be implemented as a WVGA panel and may have an aspect ratio of, for example, but not limited to, 864 x 480. The first image may be displayed at a resolution of 850 x 85, but is not limited to this. The first image may be displayed at a resolution of H: 40.0 pixel/° and V: 39.6 pixels/° in the horizontal and vertical axis directions, but is not limited to this.

Referring to (b) of FIG. 18A, a second image including a first image region IR1 to a third image region IR3 may be implemented as an H-compression type in the horizontal axis direction on the single panel. The first image may be displayed at a resolution of 850 x 170, but is not limited to this. The first image may be displayed at a still low resolution of H: 40.0 pixel/° and V: 79.1 pixel/° in the horizontal and vertical axis directions, but is not limited to this.

Referring to FIG. 18B, a third image including a first image region IR1 to a third image region IR3 may be displayed on a dual panel. The first image region IR1 and a portion of the second image region IR2 may be displayed in the first panel region PR1. The remaining portion of the second image region IR2 and the third image region IR3 may be displayed in the second panel region PR2. The third image may be displayed at a resolution of 850 x 170 + 850 x 170 = 1700 x 170, but is not limited to this. The third image may be displayed at a resolution of H: 80.0 pixel/° and V: 79.1 pixel/° in the horizontal and vertical axis directions, but is not limited to this. However, there are issues, such as increased costs, increased volume, and image continuity due to having two panels.

So far, a vehicle imaging device having a large aspect ratio using a projection optical system according to the specification has been described. The technical features of the vehicle imaging device having the large aspect ratio using the projection optical system according to the specification will be summarized as follows, but are not limited thereto.

According to the specification, more information can be provided through an image having a large aspect ratio at a position, which is close to a driver's visual field for driving, in an imaging device having a large aspect ratio for the driver.

According to the specification, an imaging device implemented by connecting a plurality of image modules can overcome the limitation of natural image implementation due to the lack of continuity at a connection portion of an image.

According to the specification, a continuous image associated with driving-related information can be implemented using a single image module in a specific region of a windshield in front of a vehicle.

According to the specification, a vehicle imaging device with a small and thin volume can be provided by using a projection optical system structure having a reflective structure and a screen offset to one side or another side.

According to the specification, a vehicle imaging device with a thin and small volume can be implemented using an ultra short throw (UST) projector and a special screen in a limited space inside a vehicle where a steering wheel, pedals, or CQT are placed.

The effects of the disclosure are not limited to those effects mentioned above, and other effects not mentioned may be clearly understood by those skilled in the art from the description of the appended claims.

The disclosure may be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Therefore, the detailed description should not be limitedly construed in all of the aspects, and should be understood to be illustrative. The scope of the present disclosure should be determined by reasonable interpretation of the appended claims, and all changes within the equivalent scope of the present disclosure are embraced by the appended claims.

## Claims

1. A vehicle imaging device comprising:
a cover forming appearance of a dashboard of a vehicle;
a picture generation unit (PGU) arranged inside the dashboard and configured to generate light to one side;
a screen panel arranged between the PGU and the cover, and configured to reflect the light generated by the PGU so that an image by the reflected light passes through the cover; and
a mirror arranged on one side of the PGU, and configured to reflect the light generated to the one side so that the reflected light is transmitted to the screen panel,
wherein the image by the light reflected from the screen panel is displayed in a specific region of a windshield of a driver's seat of the vehicle, so that a width of the image in one axial direction is greater than a length in another axial direction.

2. The vehicle imaging device of claim 1, wherein the PGU and the mirror are arranged on a left side of the screen panel,
the screen panel has an inclined structure in which a vertical distance to the cover decreases from left to right, and
the light generated by the PGU is reflected from the first mirror, the second mirror, and the screen panel, and diffuses in a certain angular range based on a direction perpendicular to the cover.

3. The vehicle imaging device of claim 1, wherein the PGU and the mirror are arranged on a right side of the screen panel,
the screen panel has an inclined structure in which a vertical distance to the cover increases from left to right, and
the light generated by the PGU is reflected from the first mirror, the second mirror, and the screen panel, and diffuses in a certain angular range based on a direction perpendicular to the cover.

4. The vehicle imaging device of claim 1, wherein the mirror comprises a first mirror arranged on one side of the PGU and configured to change an optical path by reflecting the light generated to the one side; and a second mirror configured to reflect the light reflected from the first mirror to be transmitted to the screen panel,
one surface of the first mirror, onto which the light generated by the PGU is incident, is formed in a plane shape by being tilted to one side by a first angle relative to the incident light,
one surface of the second mirror, onto which the light reflected from the first mirror is incident, is formed in a curved shape by being tilted to another side by a second angle, and
the second angle is smaller than the first angle.

5. The vehicle imaging device of claim 2, wherein the screen panel is formed inside the dashboard to have a first width in one axial direction and a first length in another axial direction,
a ratio of the first width and the first length is set to a first ratio,
a ratio of the width and the length of the image displayed on the windshield is set to a second ratio,
a top of the image displayed on the windshield is positioned lower than a center line of the windshield, and
the first ratio and the second ratio are at least 5:1.

6. The vehicle imaging device of claim 5, wherein the screen panel comprises:
a reflective layer comprising patterns formed in the another axial direction and arranged spaced apart in the one axial direction and configured to reflect the light generated by the PGU; and
a diffusion layer arranged on one surface of the reflective layer and configured to diffuse the light reflected from the reflective layer in a certain angular range based on the direction perpendicular to the cover, and
the patterns are arranged such that a spaced distance between the patterns of the reflective layer decreases as a vertical distance from the screen panel to the cover decreases.

7. The vehicle imaging device of claim 1, wherein the PGU comprises:
a display panel;
a prism arranged spaced apart from the display panel and comprising a mirror and a polarization beam splitter (PBS) formed therein;
a polarization conversion plate arranged parallel to the display panel between the display panel and the prism; and
a projection lens comprising a plurality of lenses arranged spaced apart from the prism.

8. The vehicle imaging device of claim 7, wherein the display panel comprises:
a first region corresponding to a region where the polarization conversion plate and the mirror are arranged; and
a second region corresponding to a region where the PBS is arranged,
an S-wave passing through the polarization conversion plate in the first region is reflected from the mirror and the PBS to be incident onto the projection lens,
a P-wave output in the second region passes through the PBS to be incident onto the projection lens, and
the prism comprises a first absorbing layer attached to upper and side surfaces of the prism corresponding to the first region or a second absorbing layer attached to upper and side surfaces of the prism corresponding to the second region.

9. The vehicle imaging device of claim 1, wherein the PGU comprises:
a display panel configured to radiate a P-polarized signal;
a prism arranged spaced apart from the display panel and comprising a mirror and a half mirror arranged therein; and
a projection lens comprising a plurality of lenses arranged spaced apart from the prism,
P-polarized signals radiated from a first region, which is one side of the display panel, are all reflected from the mirror and reflected by a certain percentage from the half mirror to be incident onto the projection lens, and
a remaining percentage of the P-polarized signal passed through the half mirror, of P-polarized signals radiated from the second region, which is another side of the display panel, is incident onto the projection lens.

10. The vehicle imaging device of claim 1,
wherein the PGU comprises:
a display panel;
a lower prism arranged spaced apart from the display panel and having a certain height;
a prism arranged above the lower prism, and comprising therein a first PBS and a second PBS; and
a projection lens comprising a plurality of lenses arranged spaced apart from the prism.

11. The vehicle imaging device of claim 10, wherein the display panel comprises:
a first region corresponding to a region where the first PBS is arranged; and
a second region corresponding to a region where the second PBS is arranged; and,
an upper end of the first PBS corresponds to a center of the display panel, and
a lower end of the second PBS corresponds to the center of the display panel.

12. The vehicle imaging device of claim 11, wherein the first PBS is implemented as a mirror,
the prism comprises an absorbing layer attached to upper and side surfaces of the prism corresponding to the second region,
a P-wave of an optical signal output to the first region is reflected from the mirror arranged in the first region of the prism and passes through the second PBS to be absorbed by the absorbing layer,
an S-wave of the optical signal output to the first region is reflected from the mirror and reflected from the second PBS to be incident onto the projection lens,
an S-wave reflected from the second PBS, of an optical signal output to the second region, is absorbed by the absorbing layer, and
a P-wave passing through the second PBS, of the optical signal output to the second region, is incident onto the projection lens.

13. The vehicle imaging device of claim 11, wherein the prism comprises a first absorbing layer attached to upper and side surfaces of the prism corresponding to the first region, and a second absorbing layer attached to upper and side surfaces of the prism corresponding to the second region,
a P-wave of an optical signal output to the first region passes through the first PBS arranged in the first region to be absorbed by the first absorbing layer, and
an S-wave of the optical signal output to the first region is reflected from the first PBS and the second PBS to be incident onto the projection lens.

14. The vehicle imaging device of claim 13, wherein an S-wave reflected from the second PBS, of an optical signal output to the second region, is absorbed by the second absorbing layer, and
a P-wave passing through the second PBS, of the optical signal output to the second region, is incident onto the projection lens.

15. The vehicle imaging device of claim 1, wherein the PGU comprises:
a display panel configured to radiate an unpolarized signal;
a lower prism arranged spaced apart from the display panel and having a certain height;
a prism arranged above the lower prism and comprising a mirror and a half mirror arranged therein; and
a projection lens comprising a plurality of lenses arranged spaced apart from the prism,
unpolarized signals radiated from a first region, which is one side of the display panel, are all reflected from the mirror and reflected by a certain percentage from the half mirror to be incident onto the projection lens, and
a remaining percentage of the unpolarized signal passed through the half mirror, of unpolarized signals radiated from the first region, which is another side of the display panel, is incident onto the projection lens.

16. The vehicle imaging device of any of claims 8, 13, and 14, wherein the PGU further comprises a second polarization conversion plate attached to an upper portion of the prism between the mirror and the PBS or attached to an upper portion of the prism between the first PBS and the second PBS, and configured to synthesize the P-wave with the S-wave.

17. The vehicle imaging device of any of claims 8, 13, and 14, further comprising a processor arranged in the vehicle and configured to control data included in an optical signal output from the PGU,
wherein the processor controls the PGU so that a first data set having a shape of the P-wave and a second data set having a shape of the S-wave are arranged alternately.

18. The vehicle imaging device of claim 17, wherein the processor controls a first data set and a second data set to be alternately arranged in the one axial direction by inserting second data of the second data set between adjacent data constituting the first data set, and
displays the image, implemented by the first data set and the second data set arranged alternately, in the specific region.

19. The vehicle imaging device of claim 18, wherein the PGU further comprises glass tiltably arranged between the polarization conversion plate and the prism in the first region of the display panel,
the processor controls a tilt angle of the glass so that first pixels of the first data set and second pixels of the second data set are sequentially arranged,
the processor increases the tilt angle of the glass in case that a shift value of the second pixels, compared to the first pixels, is smaller than or equal to a first threshold value, and
decreases the tilt angle of the glass in case that a shift value of the second pixels, compared to the first pixels, is greater than or equal to a second threshold value, and
the first threshold value is set to be smaller than 0.5 pixel, and the second threshold value is set to be greater than 0.5 pixel.

20. A projector comprising:
a picture generation unit (PGU) arranged inside the projector and configured to generate light to one side; and
a processor operatively coupled to the PGU and configured to control the PGU such that a first data set and a second data set are arranged alternately,
wherein the processor controls the first data set and the second data set to be alternately arranged in one axial direction by inserting second data of the second data set between adjacent data constituting the first data set, and
controls an image, implemented by the first data set and the second data set arranged alternately, to be displayed in a specific region.
